(19) Europäisches Patentamt
European Patent Office
Office européen des brevets

(11) **EP 1 816 854 A1**

(12) **EUROPEAN PATENT APPLICATION**
published in accordance with Art. 158(3) EPC

(43) Date of publication:
**08.08.2007 Bulletin 2007/32**

(51) Int Cl.:
*H04N 5/225* (2006.01)    *H04N 5/232* (2006.01)
*H04N 5/335* (2006.01)

(21) Application number: **05804081.7**

(22) Date of filing: **15.11.2005**

(86) International application number:
**PCT/JP2005/021316**

(87) International publication number:
**WO 2006/052030 (18.05.2006 Gazette 2006/20)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.11.2004 JP 2004330252**

(71) Applicants:
  • **Olympus Corporation**
    **Tokyo 151-0072 (JP)**
  • **TOKYO INSTITUTE OF TECHNOLOGY**
    **Tokyo (JP)**

(72) Inventors:
  • **NAKAMURA, Tomoyuki**
    **Shibuya-ku, Tokyo,1510072 (JP)**

  • **YANO, Takahiro**
    **hibuya-Ku, Tokyo; 1510072 (JP)**
  • **OKUTOMI, Masatoshi**
    **c/o Tokyo Institute of Technology**
    **Meguro-ku, Tokyo,1528550 (JP)**
  • **SHIMIZU, Masao**
    **c/o Tokyo Institute of Technology**
    **Tokyo 1528550 (JP)**

(74) Representative: **Hooiveld, Arjen Jan Winfried**
    **Arnold & Siedsma**
    **Sweelinckplein 1**
    **2517 GK Den Haag (NL)**

(54) **IMAGE PICKUP DEVICE, IMAGE PICKUP SYSTEM AND IMAGE PHOTOGRAPHING METHOD**

(57)    The invention provides an imaging device, an imaging system and an image photography method which can construct an image having a higher resolution than a photographed image. The imaging device is constituted by an optical imaging unit 11 (an optical imaging means for imaging an image of a subject), an imaging unit 12 (a means for converting an image imaged optically into an image signal that is discretized spatially and is sampled), an image processing unit 15 (a means for generating a high-resolution image from image signals of multiple frames), a moving velocity detecting unit 13 (a means for detecting a status change of the imaging device itself), and an imaging timing deciding unit 14 (a means for deciding a imaging timing). The imaging device is constituted such as to construct the high-resolution image from an imaging element with a little number of the pixels.

FIG.1

EP 1 816 854 A1

**Description**

TECHNICAL FIELD

The present invention relates to imaging technique that constructs a high-resolution image from an imaging element with a little number of the pixels, and more particularly relates to an imaging device, an imaging system and a photography method of image which are provided with an approach used at a time of the imaging and a high-resolution processing.

BACKGROUND TECHNIQUE

There has been known a technique of photographing multiple images while accurately displacing an imaging element at a narrower interval than a pixel interval, and generating one high precision image from the multiple images. In this case, there is an approach that photographs an image by moving an optical system or an imaging element, for example, as described in patent document 1.
However, in the approach disclosed in the patent document 1, it is necessary to control a displacement (a motion) of the optical element or the imaging element at a further narrower interval than the pixel interval. Accordingly, it is often the case that a complicated mechanism capable of executing an accurate control is necessary, and there is a problem that it is hard to construct such the mechanism inexpensively.
The present invention is made by taking the problem mentioned above into consideration, and an object of the present invention is to provide an imaging device, an imaging system and a photography method of image which execute pixel-shift-photographing without needing control of amount of accurate displacement of an optical element or an imaging element and generate a high-resolution image by using multiple images.

DISCLOSURE OF THE INVENTION

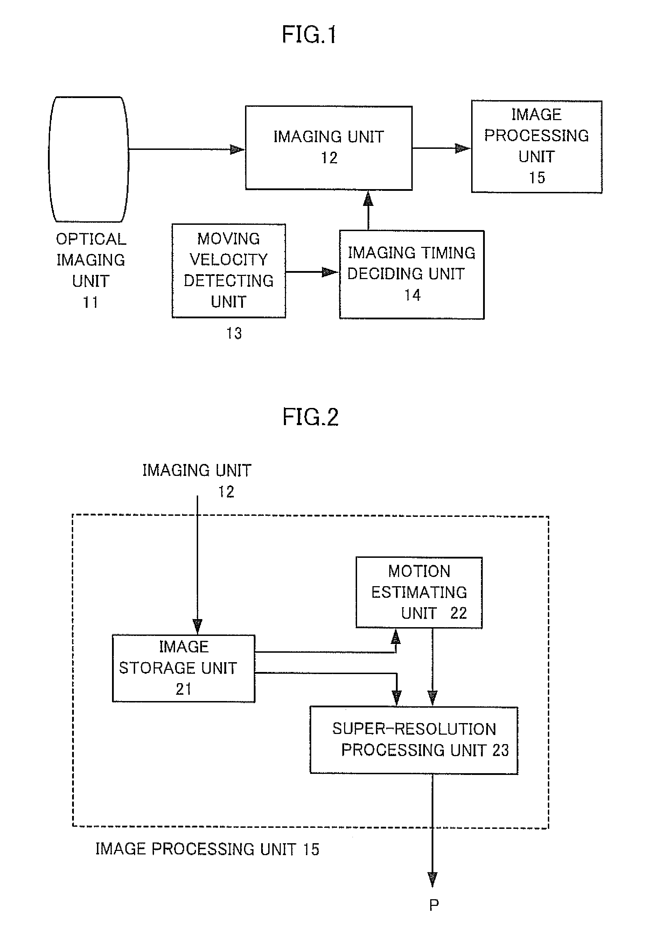

(1) In order to achieve the object mentioned above, an imaging device of the first embodiment of the present invention is characterized by: an imaging device which obtains an image of a subject electronically, comprising: an optical imagingmeans for imaging said image of said subject; an imaging means for converting an image imaged optically into an image signal that is discretized spatially and is sampled; a high-resolution processing means for generating a high-resolution image from image signals of multiple frames sampled by said imaging means; a status change detecting means for detecting a status change of said imaging device itself; and an imaging timing deciding means for deciding an imaging timing, wherein said imaging timing deciding means takes into consideration said status change of said imaging device itself detected by said status change detecting means, and decides said imaging timing for obtaining image signals of suitable frames for generating said high-resolution image by said high-resolution processing means.
The invention (1) corresponds to the first embodiment shown in FIG. 1. In the constitution of the invention (1), an optical imaging unit 11 corresponds to the optical imaging means for imaging said image of said subject; an imaging unit 12 corresponds to the imaging means for converting an image imaged optically into an image signal that is discretized spatially and is sampled; an image processing unit 15 corresponds to the high-resolution processing means for generating a high-resolution image from image signals of multiple frames sampled by said imaging means; a moving velocity detecting unit 13 corresponds to the status change detecting means for detecting a status change of said imaging device itself; and an imaging timing deciding unit 14 corresponds to the imaging timing deciding means for deciding an imaging timing, respectively.
Since the invention (1) is provided with the means for detecting the status change of the imaging device itself, it is possible to performing the imaging at such a timing that the velocity of the imaging device itself becomes small. Accordingly, it is possible to execute the pixel-shift-photographing by utilizing a random motion such as a camera shake or the like without needing control of amount of accurate displacement of the optical element or the imaging element, and generate a high-resolution image by using multiple images. When the status change here is an acceleration, the velocity is calculated based on a history of a direction and a magnitude of the acceleration.
(2) An imaging device of the second embodiment of the present invention is characterized by: an imaging device which obtains an image of a subject electronically, comprising: an optical imaging means for imaging said image of said subject; an imaging element converting an image imaged optically into an image signal that is discretized spatially and is sampled; a high-resolution processing means for generating a high-resolution image from image signals of multiple frames sampled by said imaging element; an imaging timing deciding means for deciding an imaging timing; a means for giving a spatial displacement to said imaging element; and a means for detecting a status change of said imaging element; wherein said imaging timing decidingmeans takes into consideration said status change of said imaging element detected by said means for detecting a status change of said imaging element, and decides said imaging timing for obtaining image signals of suitable frames for generating said high-resolution image by said high-resolution processing means.

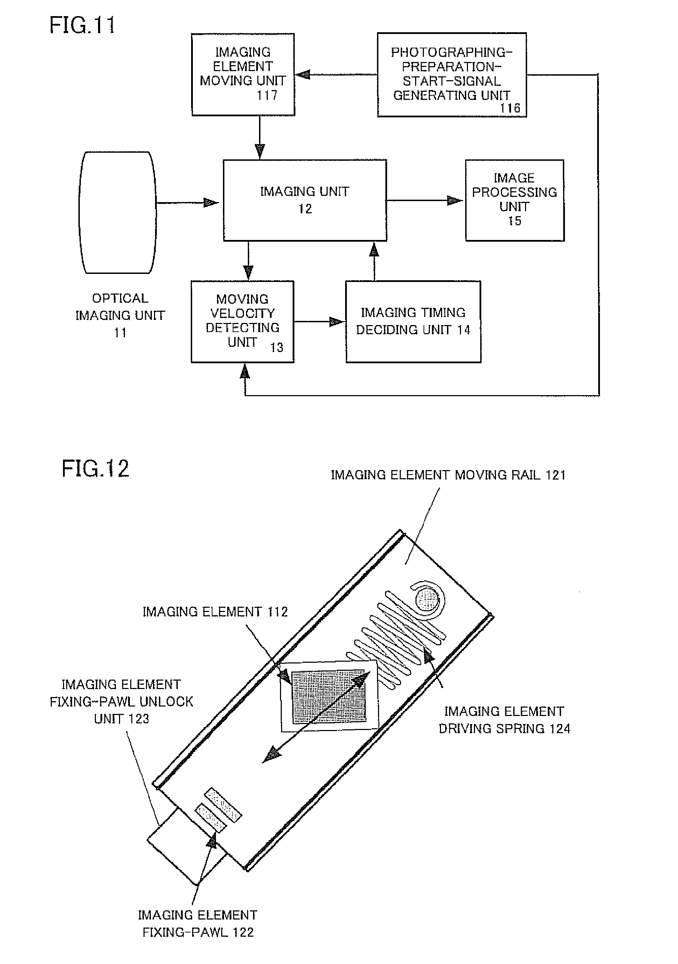

The invention (2) corresponds to the third embodiment shown in FIG. 11. In the constitution of the invention (2), an optical imaging unit 11 corresponds to the optical imaging means for imaging said image of said subject; an imaging unit 12 corresponds to the imaging element for converting an image imaged optically into an image signal that is discretized spatially and is sampled; an image processing unit 15 corresponds to the high-resolution processing means for generating a high-resolution image from image signals of multiple frames sampled by said imaging element; an imaging timing deciding unit 14 corresponds to the imaging timing deciding means for deciding an imaging timing; an imaging element moving unit 117 corresponds to the means for giving a spatial displacement to said imaging element; and a moving velocity detecting unit 13 corresponds to the means for detecting a status change of said imaging element, respectively.

The invention (2) is provided with the means for giving the spatial displacement to the imaging element in place of the imaging device itself, and the means for detecting the status change of the imaging element. Accordingly, it is possible to take the image having the displacement without depending on the holding and fixing method of the imaging device.

(3) Further, in the invention (1) and (2) mentioned above, the imaging device of the present invention is characterized by that the status change is a velocity. The constitution of the invention (3) corresponds to the moving velocity detecting unit 13 respectively described in FIGs. 1 and 11. Since the invention (3) detects the velocity change, it is possible to easily detect the status change of the imaging device or the imaging element.

(4) Further, in the invention (1) and (2) mentioned above, the imaging device of the present invention is characterized by that the status change is an acceleration. The constitution of the invention (4) corresponds to a constitution in which an acceleration detecting unit is provided in place of the moving velocity detecting unit 13 described in FIGs. 1 and 11. Since the invention (4) detects the acceleration change, it is possible to calculate the velocity at that time based on the history of the direction and the magnitude of the acceleration.

(5) Further, in the invention (1) and (2) mentioned above, the imaging device of the present invention is characterized by that the imaging is performed at a time when the velocity is 0. Since the invention (5) performs the imaging at a time when the velocity of the imaging device or the imaging element is 0, it is possible to take a high definition image having no image shake (i.e. camera shake).

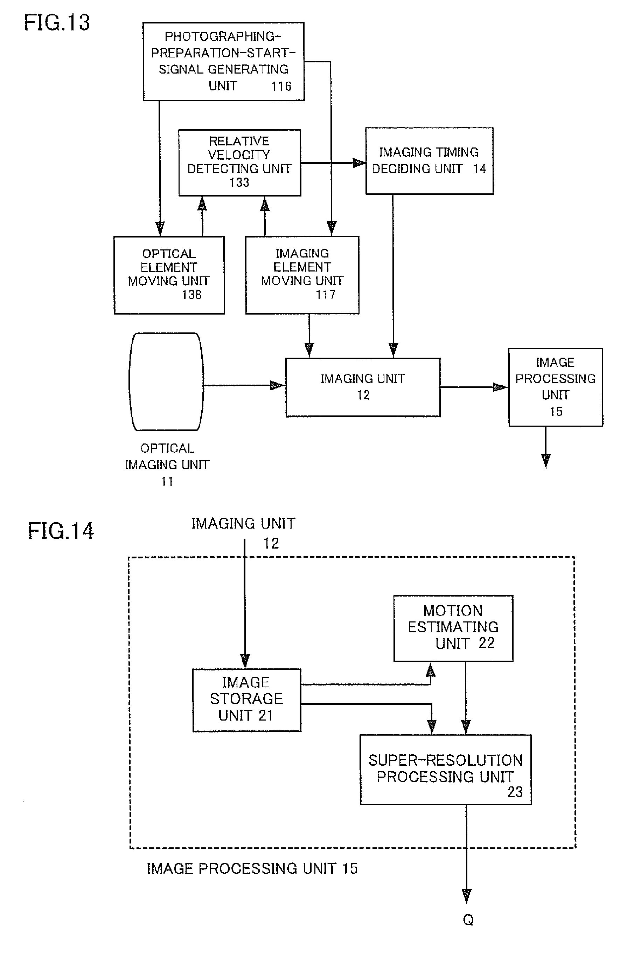

(6) Further, in any one of the inventions (2) to (5) mentioned above, the imaging device of the present invention is characterized by that said imaging element is given a displacement in one linear direction that is approximately vertical to an optical axis. The invention (6) corresponds to the third embodiment shown in FIG. 12. In the invention (6), since said imaging element is given a displacement in one linear direction that is approximately vertical to an optical axis, it is possible to efficiently obtain images of multiple frames having dispersion in photographing position, and easily perform a high-resolution processing.

(7) An imaging device of the third embodiment of the present invention is characterized by: an imaging device which obtains an image of a subject electronically, comprising: an optical imaging means for imaging said image of said subject; an imaging element for converting an image imaged optically into an image signal that is discretized spatially and is sampled; a high-resolution processing means for generating a high-resolution image from image signals of multiple frames sampled by said imaging element; an imaging timing deciding means for deciding an imaging timing; a means for giving a spatial displacement to said imaging element; a means for giving a spatial displacement in the same direction as said imaging element and in a different status from said imaging element to said optical imaging means; and a relative change detecting means for detecting a relative change between said imaging element and said optical imaging means, wherein said imaging timing deciding means takes into consideration said relative change detected by said relative change detecting means, and decides said imaging timing for obtaining image signals of suitable frames for generating said high-resolution image by said high-resolution processing means.

The invention (7) corresponds to an imaging device of the fourth embodiment shown in FIG. 13. In the invention (7), an optical imaging unit 11 corresponds to the optical imaging means for imaging said image of said subject; an imaging unit 12 corresponds to the imaging element for converting an image imaged optically into an image signal that is discretized spatially and is sampled; an image processing unit 15 corresponds to the high-resolution processing means for generating a high-resolution image from image signals of multiple frames sampled by said imaging element; an imaging timing deciding unit 14 corresponds to the imaging timing deciding means for deciding an imaging timing; a photographing-preparation-start-signal generating unit 116 corresponds to the means for generating a signal that starts a series of processing about the imaging; an imaging element moving unit 117 corresponds to the means for giving a spatial displacement to said imaging element; an optical element moving unit 138 corresponds to the means for giving a spatial displacement in the same direction as said imaging element and in a different status from said imaging element to said optical imaging means; and a relative velocity detecting unit 133 corresponds to the relative change detecting means for detecting a relative change between said imaging element and said optical imaging means, respectively.

The invention (7) is provided with the means for giving the spatial displacement to the imaging element in place of the imaging device itself and the means for giving the spatial displacement in the same direction as said imaging element and in a different status from said imaging element to said optical imaging means, and detects the relative change between the imaging element and the optical imaging means by the relative change detecting means. Accordingly, it is possible to obtain multiple images having a little image shake (camera shake) without depending on the holding and fixing method of the imaging device and perform a high-resolution processing.

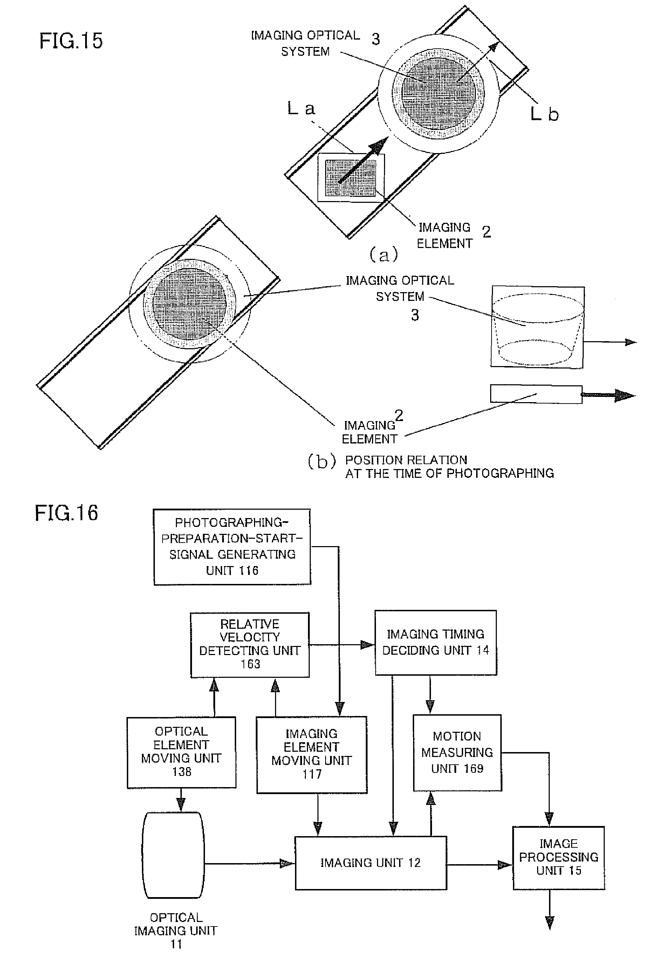

(8) Further, in the invention (7) mentioned above, the imaging device of the present invention is characterized by that the relative change is a relative velocity, and the imaging is performed at a time when the relative velocity is 0. The invention (8) corresponds to the fourth embodiment described in FIG. 13, and the fifth embodiment shown in FIG. 16. In the constitution of the invention (8), the relative change between the imaging element and the optical imaging means is the relative velocity, the detection that the relative velocity is 0 corresponds to the case that a result of detection of a relative velocity detecting unit 133 in FIG. 13 and a relative velocity detecting unit 163 in FIG. 16 is 0. As mentioned above, since the relative change between the imaging element and the optical imaging means detected by the relative change detecting means is the relative velocity, and the imaging is performed at a time when the relative velocity is 0, it is possible to take a high definition image having no image shake (camera shake).

(9) Further, in the invention (7) mentioned above, the imaging device of the present invention is characterized by that the relative change is a relative acceleration. The invention (9) is constituted such that a relative acceleration detecting unit is provided in place of the relative velocity detecting unit 133 as the means for detecting the relative change between the imaging element and the optical imaging means of the imaging device of the fourth embodiment described in FIG. 13. As mentioned above, since it is possible to detect the relative change between the imaging element and the optical imaging means based on the acceleration change and calculate the velocity from the acceleration, it is possible to obtain multiple images having a little image shake (camera shake) without depending on the holding and fixing method of the imaging device and perform the high-resolution processing.

(10) Further, in any one of the inventions (7) to (9) mentioned above, the imaging device of the present invention is characterized by that the imaging element and the optical imaging means are given a displacement in one linear direction that is approximatelyvertical to an optical axis. The invention (10) corresponds to an imaging device of the fourth embodiment described in FIG. 15. The constitution of the invention (10) in which the imaging element and the optical imaging means are given the displacement in one linear direction that is approximately vertical to the optical axis, corresponds to a constitution in which a direction of an arrow La of a displacement of an imaging element and a direction of an arrow Lb of a displacement of an optical imaging means described in FIG. 15 are one linear direction which is approximately vertical to an optical axis. Since the imaging element and the optical imaging means are given the displacement in one linear direction that is approximately vertical to the optical axis, it is possible to efficiently obtain the images of multiple frames having dispersion in photographing position which are suitable for the high-resolution processing.

(11) Further, in any one of the inventions (2) to (10) mentioned above, the imaging device of the present invention is characterized by comprising a means for measuring amount of displacement of the imaging element. The invention (11) corresponds to imaging devices according to the third, the fourth and the fifth embodiments described in FIG. 16. A motion measuring unit 169 described in FIG. 16 corresponds to the means for measuring amount of displacement of the imaging element of the invention (11). As mentioned above, since the means for measuring amount of displacement of the imaging element is provided, the motion is not estimated by computing from the image but is actually measured, whereby it is possible to obtain the information of accurate relative position regardless of the kind of the image.

(12) Further, in the invention (2) or the invention (7) as mentioned above, the imaging device of the present invention is characterized by that the means for giving the displacement spatially is an elastic member. The invention (12) corresponds to the imaging devices according to the third, the fourth and the fifth embodiments described in FIGs. 11, 13 and 16 respectively. An imaging element driving spring 124 described in FIG. 12 corresponds to the elastic member of the invention (12). As mentioned above, the elastic member such as a spring is used as the means for spatially giving the displacement to the imaging element. Vibration of the spring is attenuated together with an elapse of the time. Further, since a moving velocity becomes the lowest and a moving direction is changed in different places each time, it is possible to obtain the motion efficiently with dispersion by taking an image at the position.

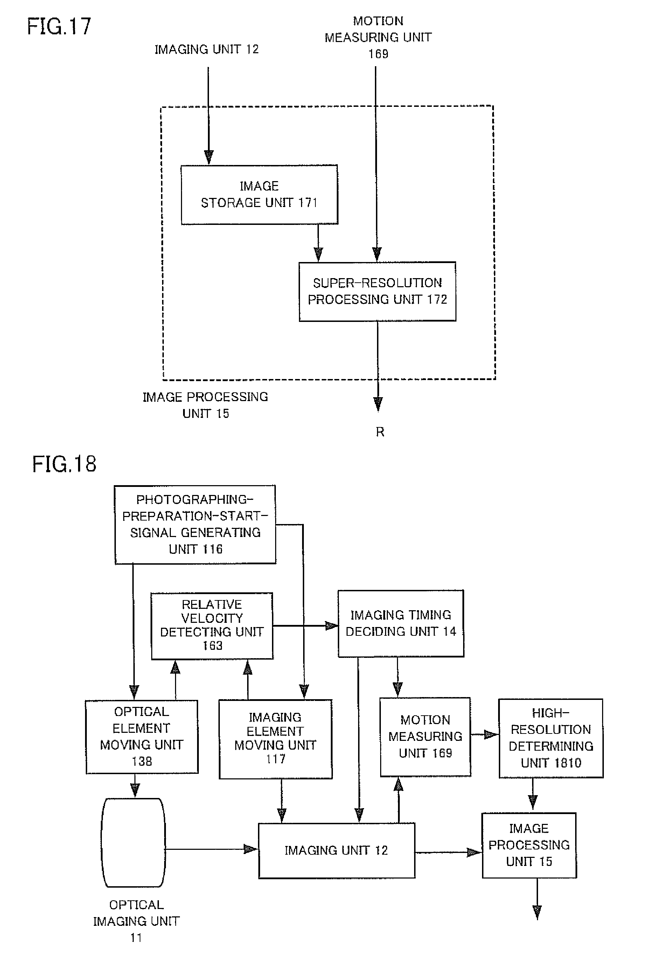

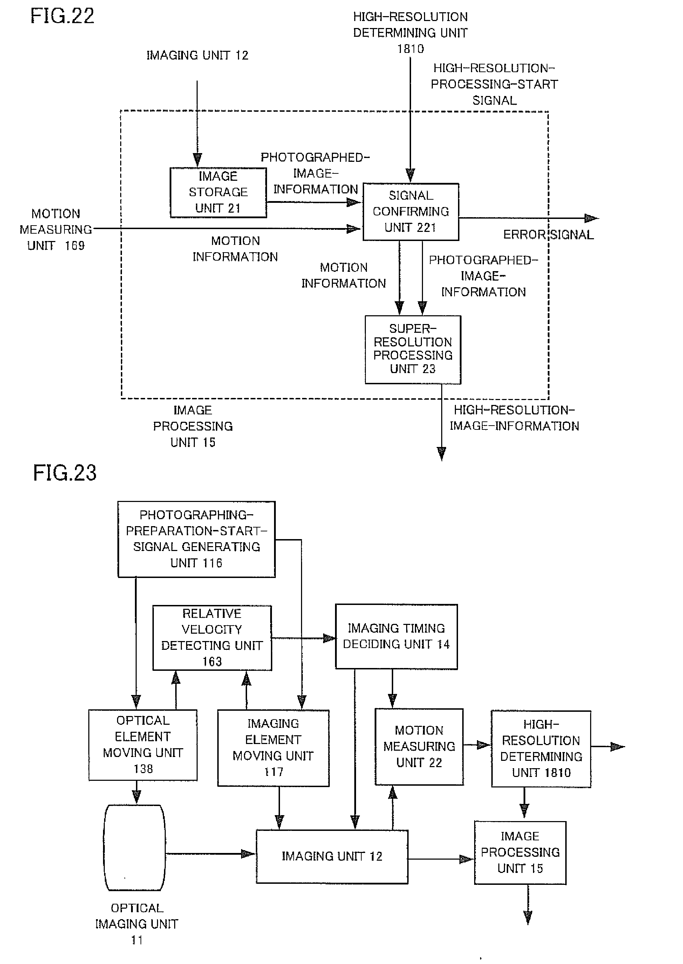

(13) Further, in any one of the inventions (1) to (12) mentioned above, the imaging device of the present invention is characterized by comprising a function that determines whether it is possible to construct a high-resolution image with a desired enlarging magnification or not, and inform a photographer. The invention (13) corresponds to the sixth embodiment described in FIGs. 18 to 23, however, it may be applied to the other embodiments. Ahigh-resolution determining unit 1810 described in FIG. 18 and a signal confirming unit 221 described in FIG. 22 correspond to the function of the invention (13) that determines whether it is possible to construct a high-resolution image with a desired enlarging magnification or not and inform a photographer. In accordance with the constitution mentioned above, it is possible to obtain the high-resolution image at a high probability in the case of performing the high-resolution processing.

(14) An imaging system of the first embodiment of the present invention is characterized by: an imaging system comprising: an imaging device having an optical imaging means for imaging said image of said subject, an imaging means for converting an image imaged optically into an image signal that is discretized spatially and is sampled, a high-resolution processing means for generating a high-resolution image from image signals of multiple frames sampled by said imaging means, a status change detecting means for detecting a status change of said imaging device itself, and an imaging timing deciding means for deciding an imaging timing; an imaging device moving means for giving a displacement to said imaging device; and a fixing means for holding or supporting said imaging device and said imaging device moving means, wherein said imaging timing deciding means takes into consideration said status change of said imaging device itself detected by said status change detecting means, and decides said imaging timing for obtaining image signals of suitable frames for generating said high-resolution image by said high-resolution processing means.

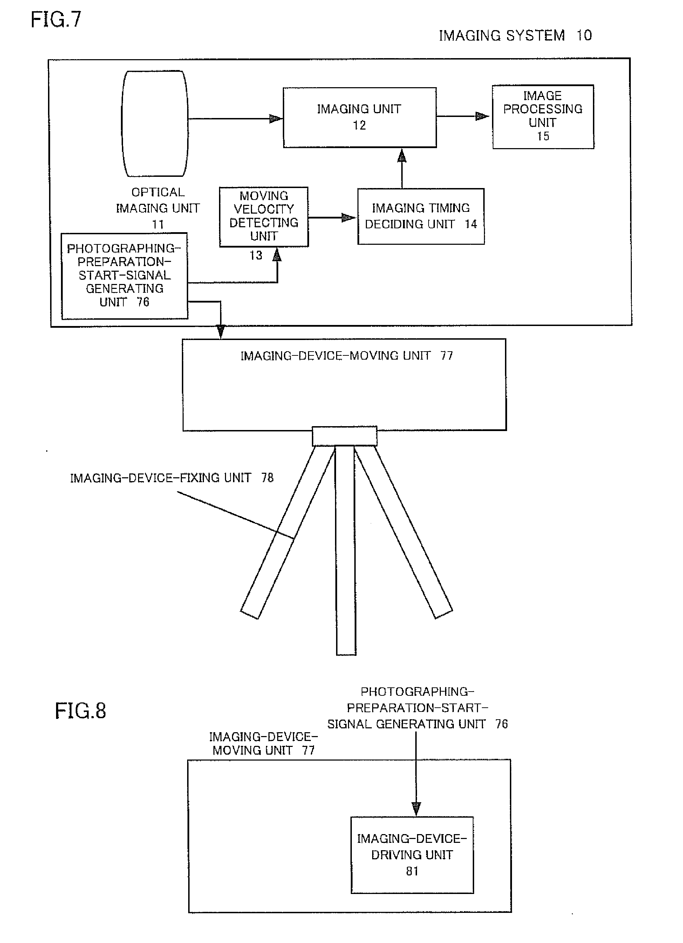

The invention (14) corresponds to the second embodiment in accordance with the present invention described in FIG. 7. In the invention (14), an optical imaging unit 11 corresponds to the optical imagingmeans for imaging said image of said subject, an imaging unit 12 corresponds to the imaging means for converting an image imaged optically into an image signal that is discretized spatially and is sampled, an image processing unit 15 corresponds to the high-resolution processing means for generating a high-resolution image from image signals of multiple frames sampled by said imaging means, a moving velocity detecting unit 13 corresponds to the status change detectingmeans for detecting a status change of said imaging device itself, an imaging timing deciding unit 14 corresponds to the imaging timing deciding means for deciding an imaging timing, a photographing-preparation-start-signal generating unit 76 corresponds to the means for generating a signal that starts a series of processing about the imaging, an imaging-device-moving unit 77 corresponds to the imaging device moving means for giving a displacement to said imaging device, an imaging-device-fixing unit 78 corresponds to the fixing means for holding or supporting said imaging device and said imaging device moving means, respectively.

The invention (14) comprises the imaging device moving means for giving a displacement to said imaging device and the fixing means for holding or supporting said imaging device and said imaging device moving means. Accordingly, it is possible to take an image at a position that is deviated in the horizontal and vertical direction without having any mechanism of independently moving in the horizontal direction and the vertical direction, by photographing while moving in one direction that is neither horizontal nor vertical with respect to the imaging device. Further, since the photographer does not hold the imaging device by a hand, it is possible to take images that only have preferable motion for the high-resolution processing.

(15) An imaging system of the second embodiment of the present invention is characterized by: an imaging system comprising: an imaging device having an optical imaging means for imaging said image of said subject, an imaging element for converting an image imaged optically into an image signal that is discretized spatially and is sampled, a high-resolution processing means for generating a high-resolution image from image signals of multiple frames sampled by said imaging element, an imaging timing deciding means for deciding an imaging timing, a means for giving a spatial displacement to said imaging element, and a means for detecting a status change of said imaging element; and a fixing means for holding or supporting said imaging device, wherein said imaging timing deciding means takes into consideration said status change of said imaging element detected by saidmeans for detecting a status change of said imaging element, and decides said imaging timing for obtaining image signals of suitable frames for generating said high-resolution image by said high-resolution processing means.

The invention (15) corresponds to a constitution in which the fixing means (the imaging-device-fixing unit 78) holding or supporting the imaging device described in FIG. 7 is applied to the imaging device described in FIG. 11. Accordingly, since the photographer does not hold the imaging device by a hand, such as the invention (14) mentioned above, the invention (15) can take images that only have preferable motion for the high-resolution processing.

(16) An imaging system of the third embodiment of the present invention is characterized by: an imaging system comprising: an imaging device having an optical imaging means for imaging said image of said subject, an imaging element for converting an image imaged optically into an image signal that is discretized spatially and is sampled, a high-resolution processing means for generating a high-resolution image from image signals of multiple frames sampled by said imaging element, an imaging timing deciding means for deciding an imaging timing, a means for giving a spatial displacement to said imaging element, a means for giving a spatial displacement in the same direction as said imaging element and in a different status from said imaging element to said optical imaging means, and a relative change detecting means for detecting a relative change between said imaging element and said optical imaging means; and a fixing means for holding or supporting said imaging device, wherein said imaging timing deciding means takes into consideration said relative change detected by said relative change detecting means, and decides said imaging timing for obtaining image signals of suitable frames for generating said high-resolution image by said high-resolution processing means.

The invention (16) corresponds to a constitution in which the fixing means (the imaging-device-fixing unit 78) holding or supporting the imaging device described in FIG. 7 is applied to the imaging device described in FIG. 13. Accordingly, since the photographer does not hold the imaging device by a hand, such as the invention (15) mentioned above, the invention (16) can take images that only have preferable motion for the high-resolution processing.

(17) An imaging system of the fourth embodiment of the present invention is characterized by: an imaging system comprising: an imaging device having an optical imaging means for imaging said image of said subject, an imaging element for converting an image imaged optically into an image signal that is discretized spatially and is sampled, a high-resolution processing means for generating a high-resolution image from image signals of multiple frames sampled by said imaging element, an imaging timing deciding means for deciding an imaging timing, a means for giving a spatial displacement to said imaging element, a means for giving a spatial displacement in the same direction as said imaging element and in a different status from said imaging element to said optical imaging means, a relative change detecting means for detecting a relative change between said imaging element and said optical imaging means, and a means for measuring a spatial position of said imaging element when the imaging is performed; and a fixing means for holding or supporting said imaging device, wherein said imaging timing deciding means takes into consideration said relative change detected by said relative change detecting means, and decides said imaging timing for obtaining image signals of suitable frames for generating said high-resolution image by said high-resolution processing means.

The invention (17) corresponds to a constitution in which the fixing means (the imaging-device-fixing unit 78) holding or supporting the imaging device described in FIG. 7 is applied to the imaging device described in FIG. 16. Accordingly, since the photographer does not hold the imaging device by a hand, such as the inventions (15) and (16) mentioned above, the invention (17) can take images that only have preferable motion for the high-resolution processing.

(18) Further, in the invention (14) or the invention (15) as mentioned above, the imaging system of the present invention is characterized by that the status change is a velocity or an acceleration. The invention (18) is constituted such that the high-resolution image can be generated by using multiple images which is obtained by executing pixel-shift-photographing in the imaging system detecting the status change based on the velocity or the acceleration of the imaging device itself or the imaging element.

(19) Further, in the invention (16) or the invention (17) as mentioned above, the imaging system of the present invention is characterized by that the relative change is a relative velocity or a relative acceleration. The invention (19) is constituted such that the high-resolution image can be generated by using multiple images obtained by executing pixel-shift-photographing, in the imaging system detecting the relative change between the imaging element and the optical imaging means based on the relative velocity or the relative acceleration, in the constitution having the means for giving the spatial displacement to the optical imaging means in the same direction as the imaging element and in the different state from the imaging element.

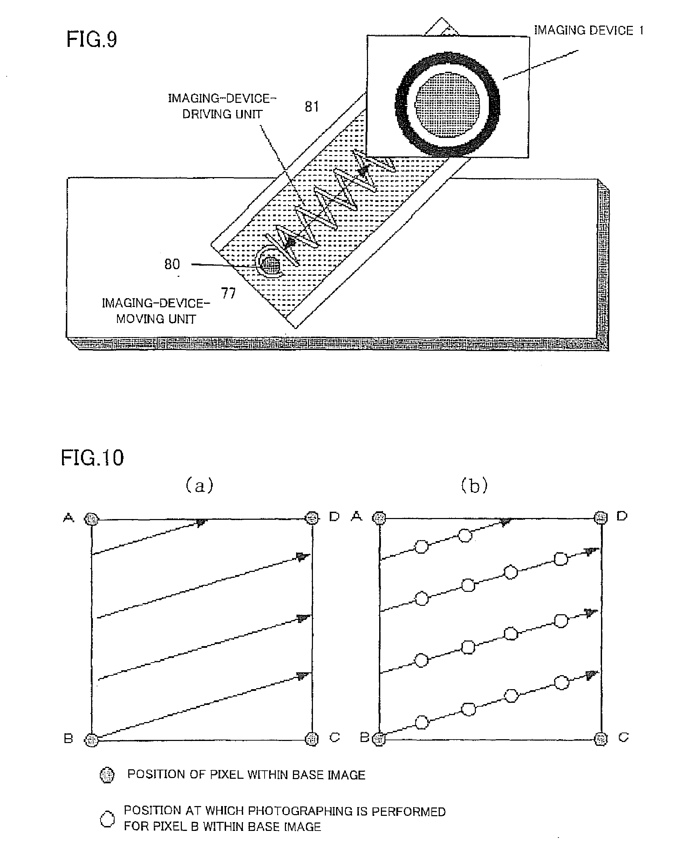

(20) Further, in any one of the inventions (14) to (19) mentioned above, the imaging system of the present invention is characterized by that said imaging device is given a displacement in one linear direction that is approximately vertical to an optical axis. The invention (20) has the displacement mechanism described in FIG. 9. Accordingly, it is possible to obtain the imaging system in which the imaging can be performed at the position deviated in the horizontal and vertical directions without having any mechanism independently moving in the horizontal direction and the vertical direction with respect to the imaging device.

(21) Further, in any one of the inventions (14) to (20) mentioned above, the imaging system of the present invention is characterized by that the means for giving the spatial displacement is an elastic member. The invention (21) employs the elastic member such as the spring described in FIG. 9 as the means for giving the spatial displacement to the imaging device. The vibration of the spring is attenuated together with an elapse of the time. Further, since a moving velocity becomes the lowest and a moving direction is changed in different places each time, it is possible to obtain the imaging system which can obtain the motion efficiently having the dispersion by photographing at the position.

(22) Further, in any one of the inventions (14) to (21) mentioned above, the imaging system of the present invention is characterized by that the high-resolution processing means comprises a function that determines whether it is possible to construct a high-resolution image with a desired enlarging magnification or not, and informs a photographer. The invention (22) is constituted such that the imaging system is provided with the function that determines whether it is possible to construct a high-resolution image or not and informs a photographer, such as a high-resolution determining unit 1810 described in FIG. 18 and a signal confirming unit 221 described in FIG. 22. Accordingly, since it is possible to omit an unnecessary high-resolution processing, it is possible to construct the imaging system which can obtain the high-resolution image at a high probability in the case that the high-resolution processing is executed.

(23) A photography method of image of the first embodiment of the present invention is characterized by: a photography method of image which is based on a presupposition that a high-resolution image is constructed by using multiple images, comprising: a step of detecting a status change of an imaging device itself; and a step of deciding an imaging timing, wherein said status change of said imaging device is considered and the imaging is performed at a suitable timing.

As an example, the invention (23) corresponds to an image photography method using the constitution detecting the status change of the imaging device itself by the moving velocity detecting unit 13 and deciding the imaging timing by the imaging timing deciding unit 14 as described in FIG. 1. Since the invention (23) sets the step (the procedure) of deciding the imaging timing on the basis of the step (the procedure) of detecting the status change of the imaging device itself, as mentioned above, it is possible to execute the photographing at such a timing that the velocity of the imaging device itself becomes small. Accordingly, it is possible to realize the imaging photography method in which it is possible to execute the pixel-shift-photographing by utilizing a random motion such as a camera shake or the like without needing control of amount of accurate displacement of the optical element or the imaging element, and generate a high-resolution image by using multiple images. In the case that the status change is the acceleration, the velocity is calculated based on a history of a direction and a magnitude of the acceleration.

(24) Further, an image photography method according to the present invention is characterized by that the invention (23) further comprises a step of generating a signal that starts a series of processing about the imaging and a step of giving a displacement to said imaging device after having received said signal that starts a series of processing about the imaging. The invention (24) corresponds to an image photography method using the constitution which generates a signal that starts a series of processing about the imaging by the photographing-preparation-start-signal generatingunit 76, and gives a displacement to the imaging device by an imaging-device-moving unit 77, described as one example in FIG. 7. Since the invention (24) is added the step of generating a signal that starts a series of processing about the imaging and the step of giving a displacement to said imaging device after having received said signal that starts a series of processing about the imaging as mentioned above, it is possible to realize the image photography method of executing the high-resolution processing by using the image having a finer motion than a pixel interval of the imaging element.

(25) Further, an image photography method according to the present invention is characterized by that the invention (23) or the invention (24) further comprises a step of giving a displacement in one linear direction that is approximately vertical to an optical axis to said imaging device. The invention (25) corresponds to an image photography method using a constitution such as an imaging-device-driving unit 81, for example, described in FIG. 9. Since the invention (25) has a procedure of giving the displacement in one linear direction that is approximately vertical to the optical axis to the imaging device as mentioned above, it is possible to take the image at a position which is deviated in the horizontal and vertical directions.

(26) Aphotographymethodof image of the second embodiment of the present invention is characterized by: a photography method of image which is based on a presupposition that a high-resolution image is constructed by using multiple images, comprising: a step of generating a signal that starts a series of processing about the imaging; a step of giving a spatial displacement to an imaging element after having received said signal that starts a series of processing about the imaging; a step of detecting a status change of said imaging element; and a step of deciding an imaging timing, wherein detected status change of said imaging element is considered and the imaging is performed at a suitable timing.

The invention (26) corresponds to an image photography method using the constitution generating the signal that starts a series of processing about the imaging by the photographing-preparation-start-signal generating unit 116, giving the spatial displacement to the imaging element by the imaging element moving unit 117, detecting the status change of the imaging element by the moving velocity detecting unit 13, and deciding the imaging timing by the imaging timing deciding unit 14, for example, described in FIG. 11. The invention (26) can take the image having the displacement without depending on the holding and fixing method of the imaging device, by detecting the displacement of the imaging element in place of the imaging device itself.

(27) Further, an image photography method according to the present invention is characterized by that the invention (26) further comprises a step of giving a displacement in one linear direction that is approximately vertical to an optical axis to said imaging element. The invention (27) corresponds to an image photography method using a constitution giving a displacement in one linear direction that is approximately vertical to an optical axis to the imaging element, for example, described in FIG. 12. The invention (27) is constituted such as to have the step mentioned above, it is possible to obtain the image photography method capable of imaging at a position which is deviated in the horizontal and vertical directions.

(28) A photography method of image of the third embodiment of the present invention is characterized by: a photography method of image which is based on a presupposition that a high-resolution image is constructed by using multiple images, comprising: a step of generating a signal that starts a series of processing about the imaging; a step of giving a spatial displacement to an imaging element and giving a spatial displacement in the same direction as said imaging element and in a different status from said imaging element to a part or a whole of an imaging optical system after having received said signal that starts a series of processing about the imaging; a step of detecting a relative change between said imaging element and said imaging optical system; and a step of deciding an imaging timing, wherein saidrelative change between said imaging element and said imaging optical system is consider and the imaging is performed at a suitable timing.

The invention (28) corresponds to an image photography method using the consititution generating the signal that starts a series of processing about the imaging by the photographing-preparation-start-signal generating unit 116, giving the spatial displacement to the imaging element by the imaging element moving unit 117, giving a spatial displacement in the same direction as said imaging element and in a different status from said imaging element to a part or a whole of an imaging optical system by an optical element moving unit 138, detecting the relative change between the imaging element and the optical imaging means by a relative velocity detecting unit 133, and deciding the imaging timing by the imaging timing deciding unit 14, for example, described in FIG. 13. As mentioned above, the invention (28) gives the spatial displacement to the optical imaging means in the same direction as the imaging element and in the different state from the imaging element, and detects the relative change between the imaging element and the optical imaging means by the relative change detecting means. Accordingly, it is possible to obtain multiple images having a little of image shake (camera shake) without depending on the holding and fixing method of the imaging device, and take images for high-resolution processing.

(29) Aphotographymethod of image of the fourth embodiment of the present invention is characterized by: a photography method of image which is based on a presupposition that a high-resolution image is constructed by using multiple images, comprising: a step of generating a signal that starts a series of processing about the imaging; a step of giving a spatial displacement to an imaging element; a step of giving a spatial displacement in the same direction as said imaging element and in a different status from said imaging element to a part or a whole of an imaging optical system; a step of detecting a relative change between said imaging element and said imaging optical system; a step of deciding an imaging timing; and a step of measuring a spatial position of said imaging element when the imaging is performed, wherein the imaging is performed at a time when said relative change between said imaging element and said imaging optical system becomes smaller than a constant value.

The invention (29) corresponds to an image photography method using the constitution generating the signal that starts a series of processing about the imaging by the photographing-preparation-start-signal generating unit 116, giving the spatial displacement to the imaging element by the imaging element moving unit 117 , giving a spatial displacement in the same direction as said imaging element and in a different status from said imaging element to a part or a whole of an imaging optical system by an optical element moving unit 138, detecting the relative change between the imaging element and the optical imaging means by a relative velocity detecting unit 163, deciding the imaging timing by the imaging timing deciding unit 14, and measuring a spatial position of said imaging element when the imaging is performed by a motion measuring unit 169 , for example, described in FIG. 16. As mentioned above, since the invention (29) measures the spatial position of the imaging element when the imaging is performed by the motion measuring unit 169, it is possible to obtain the information of accurate relative position regardless of the kind of the image.

(30) Further, an image photography method according to the present invention is characterized by that the invention (28) or the invention (29) further comprises a step of giving a displacement in one linear direction that is approximately vertical to an optical axis to said imaging element and a part or a whole of said imaging optical system. The invention (30) corresponds to an image photography method using a constitution giving a displacement to the imaging element and the imaging optical system, for example, described in FIG. 15. As mentioned above, in accordance with the invention (30), since the imaging element and the optical imaging means are given the displacement in one linear direction which is approximately vertical to the optical axis, it is possible to take an image at a position having a displacement in the horizontal and vertical directions without having any mechanism of independently the imaging element and the optical image forming means in the horizontal direction and the vertical direction.

(31) Further, an image photography method according to the present invention is characterized by that in any one of the inventions (28) to (30), the step of detecting the relative change is a step of detecting a relative velocity or a relative acceleration. The invention (31) corresponds to an image photography method using a constitution which detects a velocity by the relative velocity detecting unit 133 or detects a relative acceleration in place of the relative velocity detecting unit 133, for example, in FIG. 13. As mentioned above, the invention (31) can calculate the velocity at that time based on the history and the direction and the magnitude of the acceleration in the case that the acceleration is detected as the relative change between the imaging element and the imaging optical system.

(32) Further, an image photography method according to the present invention is characterized by that any one of the inventions (23) to (31), further comprises a step of measuring amount of displacement of the imaging element. The invention (32) corresponds to an image photography method using a constitution having a motion measuring unit 169, for example, described in FIG. 16. As mentioned above, since the method has the step of measuring the amount of displacement of the imaging element, it is possible to obtain the information of accurate relative position between the images regardless of the kind of the image.

(33) Further, an image photography method according to the present invention is characterized by that any one of the inventions (23) to (32), further comprises a step of determining whether it is possible to construct a high-resolution image or not, and informing a photographer. For example, the invention (33) corresponds to an image photography method using a constitution provided with a high-resolution determining unit 1810 described in FIG. 18, and a signal confirming unit 221 described in FIG. 22. As mentioned above, since an unnecessary high-resolution processing is not executed by determining whether or not it is possible to construct the high-resolution image, it is possible to obtain the high-resolution image at a high probability in the case that the high-resolution processing is executed.

BRIEF DESCRIPTION OF THE DRAWINGS

FIG. 1 is a schematic view showing an embodiment in accordance with the first invention;
FIG. 2 is a schematic view of an image processing unit in the embodiment in accordance with the first invention;
FIG. 3 is a flow chart of motion estimation;
FIG. 4 is a conceptual view of estimation of optimum similarity of the motion estimation;
FIG. 5 is a flow chart of high-resolution image estimation;
FIG. 6 is a schematic view of a super-resolution processing;
FIG. 7 is a schematic view showing an embodiment in accordance with the second invention;
FIG. 8 is a schematic view of an imaging-device-moving unit in the embodiment in accordance with the second invention;
FIG. 9 is an explanatory view showing one example of movement of an imaging device in the embodiment in accordance with the second invention;
FIG. 10 is an explanatory view showing a tracking capable of being photographed and equal to or less than 1 pixel at a time of moving the imaging device diagonally;
FIG. 11 is a schematic view showing an embodiment in accordance with the third invention;
FIG. 12 is an explanatory view showing a constitution example of an imaging unit and an imaging element driving unit in the embodiment in accordance with the third invention;
FIG. 13 is a schematic view showing an embodiment in accordance with the fourth invention;
FIG. 14 is a schematic view of an image processing unit in the embodiment in accordance with the fourth invention;
FIG. 15 is an explanatory view showing an example of a positional relation between an optical element and an imaging element in the embodiment in accordance with the fourth invention;
FIG. 16 is a schematic view showing an embodiment in accordance with the fifth invention;
FIG. 17 is a schematic view of an image processing unit in the embodiment in accordance with the fifth invention;
FIG. 18 is a schematic view showing an embodiment in accordance with the sixth invention;
FIG. 19 is an explanatory view showing an example of an unequal distribution of motion in the case of photographing multiple images;
FIG. 20 is an explanatory view with respect to a determination of a belonging-region of the motion;
FIG. 21 is a schematic view of a high-resolution determining unit in the embodiment in accordance with the sixth invention;
FIG. 22 is a schematic view of an image processing unit in the embodiment in accordance with the sixth invention; and
FIG. 23 is a schematic view of a modified example of the embodiment in accordance with the sixth invention.

THE BEST MODE FOR CARRYING OUT THE INVENTION

A description will be given to embodiments in accordance with the present invention with reference to the accompanying drawings. FIG. 1 is a schematic view showing an imaging device in accordance with the first embodiment. In this case, a description will be given to a super-resolution processing relating to an image processing of the present invention. The super-resolution processing is an approach which take multiple images having displacement in a sub-pixel level and construct a high-resolution image after canceling deterioration factors such as an optical system and so on of these images.

An imaging device shown in FIG. 1 is constituted by an optical imaging unit 11, an imaging unit 12, a moving velocity detecting unit 13, an imaging timing deciding unit 14 and an image processing unit 15. In this case, the imaging unit 12 is constituted, for example, by an image sensor such as a CCD, a CMOS or the like. The imaging device is constituted such that a photographer takes image in a state of holding the imaging device by a hand. At a time of photographing, a light from a subject is imaged on the imaging unit 12 by the optical imaging unit 11.

At this time, a moving velocity at a time of a displacement of the imaging device which is generated by the photographer holding the imaging device by the hand is detected by the moving velocity detecting unit 13, and information of the moving velocity is given to the imaging timing deciding unit 14. The displacement of the imaging device at this time maybe consciously generated by the photographer or may be unconsciously generated.

The imaging timing deciding unit 14 transmits a photographing signal to the imaging unit 12 at a time when the moving velocity is smaller than a certain constant value, and the imaging unit 12 receives the signal so as to execute the photographing. The photographed-image-information is transmitted to the image processing unit 15. The image processing unit 15 generates an image having a higher resolution than that at a time of photographing by using image information of multiple frames with the transmitted displacement. The image processing unit 15 constructs a high-resolution image by using multiple low-resolution images in which the imaging position has a displacement. In this case, on the assumption that the high-resolution processing is executed, for example, in accordance with a super-resolution technique, a description will be given to the method as follows.

In this case, in FIG. 1, the moving velocity at a time when the imaging device is displaced is detected by the moving velocity detecting unit 13. The constitution of the present invention is not limited to the detection of the moving velocity at a time when the imaging device is displaced as mentioned above. The constitution may be made such as to detect a status change at a time when the imaging device is displaced, for example, an acceleration, calculate a velocity based on a history of a direction and a magnitude of the acceleration, and execute an imaging at a time when the calculated velocity becomes smaller than a constant value. Further, in the case that the status change is constituted by a velocity, an example that the velocity becomes smaller than a constant value includes a case that the velocity comes to 0. If the imaging is executed in the case that the velocity comes to 0, it is possible to obtain a high definition image having no camera shake.

The imaging device of FIG. 1 comprises the moving velocity detecting unit 13 and the imaging timing deciding unit 14, and is constructed such as to realize an image photography method in accordance with the following procedures (steps) at a time of executing the high-resolution processing of the image by using multiple images. In other words, the imaging device has a step of detecting a status change of the imaging device itself and a step of deciding the imaging timing, and performs the imaging at a suitable timing while taking into consideration the status change of the imaging device.

FIG. 2 is a schematic view showing one example of the image processing unit 15 in the case of using the super-resolution technique. In this case, the image processing unit 15 is constituted by an image storage unit 21, a motion estimating unit 22 and a super-resolution processing unit 23. The photographed-image-information is transmitted to the image storage unit 21 from the imaging unit 12. The image storage unit 21 stores the photographed-image-information of multiple frames. The image information is transmitted to the motion estimating unit 22 from the image storage unit 21, and a relative displacement amount (hereinafter, refer to as a motion) which utilizes one certain image as a base is computed.

The computed motion is transmitted to the super-resolution processing unit 23. Further, in addition to the information of the motion, photographed-image-information of multiple frames is transmitted to the super-resolution processing unit 23 from the image storage unit 21. The super-resolution processing is executed by the super-resolution processing unit 23 by using the information of these motions and the photographed-image-information per each of the frames, and the imaging unit 12 generates an image P having a higher resolution than the image photographed.

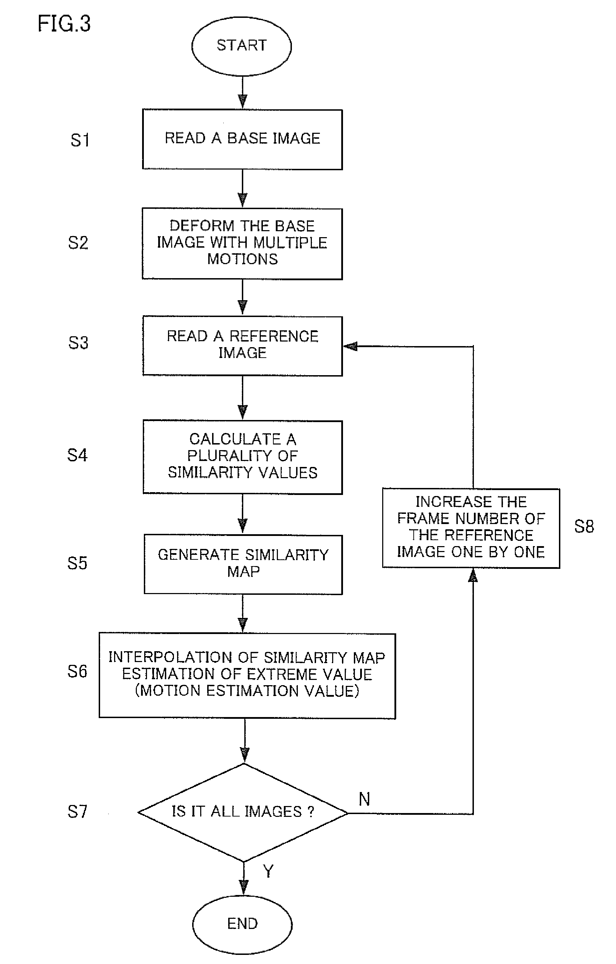

FIG. 3 is a flow chart that shows details of an algorithm of the motion estimation. A description will be given below along the flow of the algorithm in accordance with the flow chart of FIG. 3. S1: read one image which becomes a basis of the motion estimation and define this image as a base image. S2: generate an image sequence by deforming the base image with multiple motions. S3: read one reference image which is used for performing the motion estimation between the base image and itself. S4 : calculate a plurality of similarity values between the image sequence obtained by deforming the base image with multiple motions and the reference image. S5: generate a discrete similarity map by utilizing a relation between the parameter of deformation motion and calculated similarity value.

S6: search an extreme value of the similarity map by interpolating the discrete similarity map generated in S5, and find the extreme value of the similarity map. The deformation motion with the extreme value becomes an estimated motion. As a search method of the extreme value of the similarity map, there are a parabola fitting, a spline interpolation method and the like. S7 : determine whether or not the motion estimation is performed for all reference images. S8 : in the case that the motion estimation is not performed for all reference images, the step goes back to S3 by increasing the frame number of the reference image one by one, and continues a reading processing of the next image. The motion estimation is performed for all reference images which become an object, and the processing is finished if the result of determination in S7 comes to "Y".

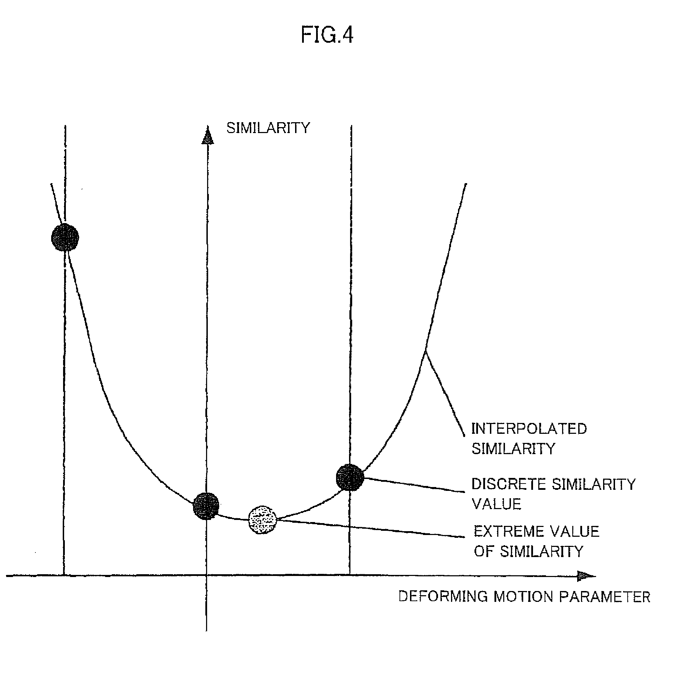

FIG. 4 shows a conceptual view showing an example in which the motion estimation is executed in accordance with the parabola fitting. A vertical axis in FIG. 4 indicates a similarity, and the smaller the value is, the higher the similarity is. A black circle in FIG. 4 indicates a discrete similarity value, and a gray circle indicates an extreme value of the similarity. A curve connecting the discrete similarity values comes to an interpolated similarity.

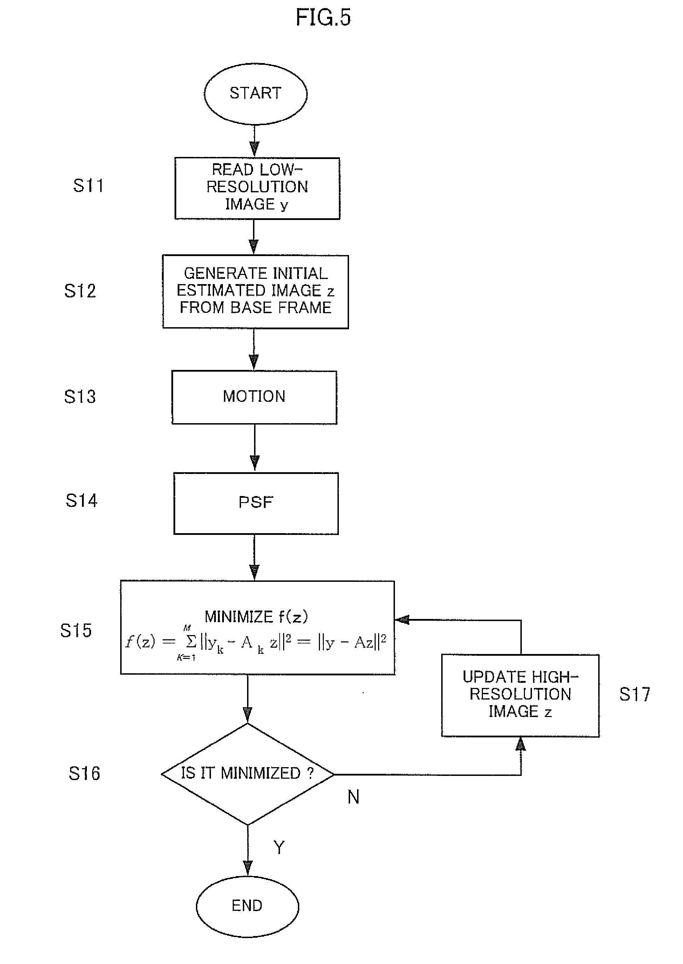

FIG. 5 is a flow chart showing an algorithm of the high-resolution image estimating processing. Next, a description will be given to the flow chart of FIG. 5. S11: read n number of low-resolution images obtained by imaging for using in the high-resolution image estimation (where, $n \geq 1$). S12: generate an initial high-resolution image by assuming one arbitrary image of multiple low-resolution images as a base frame and performing an interpolation and enlargement processing. This step can be omitted as the case may be. S13: clarify a position relation between the images on the basis of the motion between the base frame and the other frames of images, which is previously determined in accordance with some kind or another motion estimating method. S14: determine a point spread function (PSF) while taking into consideration an imaging characteristic such as an optical transfer function (OTF), a CCD aperture or the like. The PSF utilizes, for example, a Gauss function. S15: minimize an evaluation function f(z) on the basis of the information of S13 and S14. In this case, f(z) is expressed by the following Expression 1.

[Expression 1]

$$f(\mathbf{z}) = \sum_{k=1}^{M} \left\| \mathbf{y}_k - \mathbf{A}_k \mathbf{z} \right\|^2 = \left\| \mathbf{y} - \mathbf{A}\mathbf{z} \right\|^2$$

In Expression 1, reference symbol y denotes a low-resolution image, reference symbol z denotes a high-resolution image, and reference symbol A denotes an image transformation matrix expressing an imaging system including motion between images, the PSF and the like. In order to minimize the evaluation function, for example, steepest descent method is employed. S16: determine whether or not f(z) computed in S15 is minimized. In the case that f(z) is minimized, the high-resolution image z is obtained by finishing the process. S17 : in the case that f(z) is not minimized yet, the step goes back to S13 by updating the high-resolution image z.

In the case that steepest descent method is employed for minimizing the evaluation function f(z), the following Expression 2 is obtained.

[Expression 2]

$$\mathbf{z}_{n+1} = \mathbf{z}_n - \alpha_n d_n$$

Accordingly, the following Expression 4 is obtained from the following Expression 3, and the high-resolution image at a time of reiterating iterative computation for minimizing at n times can be expressed such as the following Expression 5.

[Expression 3]

$$d_n = \left. \frac{\partial f}{\partial \mathbf{z}} \right|_{\mathbf{z}=\mathbf{z}(n)}$$

[Expression 4]

$$\frac{\partial f}{\partial \mathbf{z}} = \mathbf{A}^T (\mathbf{A}\mathbf{z} - \mathbf{y})$$

[Expression 5]

$$\mathbf{z}_{n+1} = \mathbf{z}_n + \alpha \mathbf{A}^T (\mathbf{A}\mathbf{z} - \mathbf{y})$$

In this case, reference symbol n denotes iterative computation number of times and reference symbol $\alpha$ denotes a contribution ratio (a weight coefficient) in each of terms.

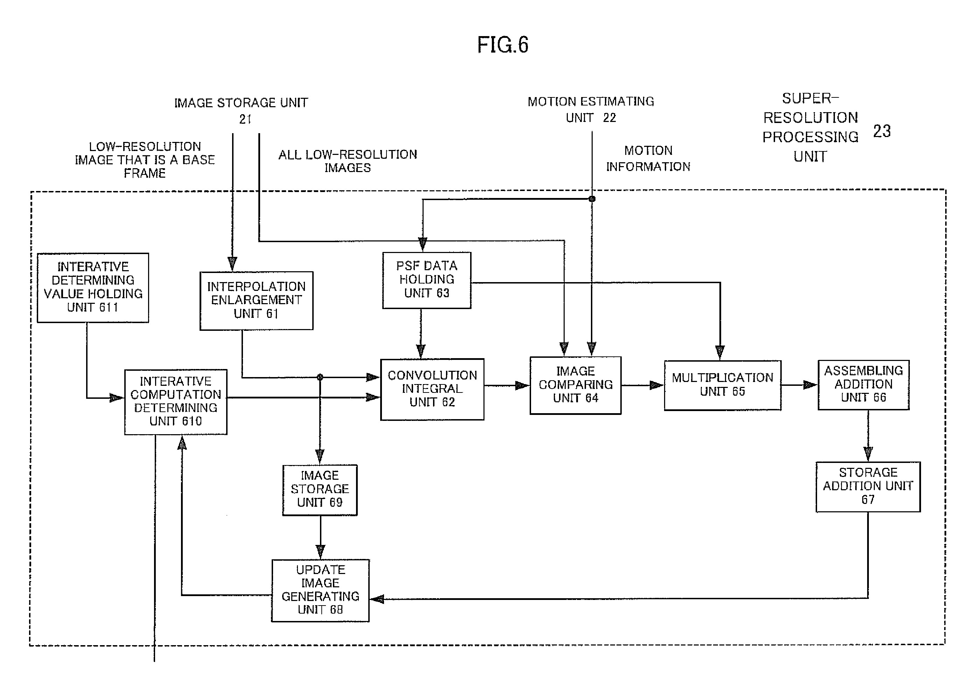

FIG. 6 is a schematic view showing an example of the constitution of the super-resolution processing unit 23 at a time of executing the algorithm mentioned above. The super-resolution processing unit 23 is constituted by an interpolation enlargement unit 61, a convolution integral unit 62, a PSF data holding unit 63, an image comparing unit 64, a multiplication unit 65, an assembling addition unit 66, a storage addition unit 67, an update image generating unit 68, an image storage unit 69, an iterative computation determining unit 610, and an iterative determining value holding unit 611. First, one image becomes a basis among the images of multiple frames is transmitted to the interpolation enlargement unit 61 from the image storage unit 21, an interpolation enlargement of the image is executed and an initial estimated image is generated in the interpolation enlargement unit 61. As a method of the interpolation enlargement used here, for example, there can be listed up a general bi-linear interpolation, a bi-cubic interpolation and the like.

The image interpolated and enlarged by the interpolation enlargement unit 61 is transmitted to the convolution integral unit 62, and is convolution integrated with the PSF data given from the PSF data holding unit 63 at a suitable coordinate position on the basis of the motion per each of the frames determined by the motion estimating unit 22. The interpolated and enlarged image data is simultaneously transmitted to the image storage unit 69, and is stored here. The image data convolution calculated by the convolution integral unit 62 is transmitted to the image comparing unit 64. The image comparing unit 64 compares the photographed image given from the image storage unit 21 with the convolution-calculated-image-data at the suitable coordinate position.

A residual error between the photographed image given from the image storage unit 21 and the convolution-calculated-image-data which are compared by the image comparing unit 64 is transmitted to the multiplication unit 65. The multiplication unit 65 multiplies the value per each of the pixels of the PSF data given from the PSF data holding unit 63 by the residual error mentioned above. The result of computation is transmitted to the assembling addition unit 66, and is put at the corresponding coordinate position. In this case, since the image data from the multiplication unit 65 is deviated little by little in the coordinate position while keeping the overlap, the overlapped portion is added.

When the assembling addition of the data for one photographed image is finished by the assembling addition unit 66, the data is transmitted to the storage addition unit 67. The storage addition unit 67 stores the data which is sequentially transmitted until the frame number of processing is finished, and sequentially adds the respective frame of image data in correspondence to the estimated motion. The image data added by the storage addition unit 67 is transmitted to the update image generating unit 68.

The image data stored in the image storage unit 69 is given to the update image generating unit 68, simultaneously with the image data added by the storage addition unit 67, and the update image data is generated by adding these two image data after weighting. The generated update image data is given to the iterative computation determining unit 610, and it is determined whether or not the computation is reiterated on the basis of the iterative determining value given from the iterative determining value holding unit 611.

In the case that the computation is reiterated in the iterative computation determining unit 610, the data is transmitted to the convolution integral unit 62 and the series of processing after the convolution integral unit 62 are reiterated. In the case that the computation is not reiterated, the generated image data is output. The image output from the iterative computation determining unit 610 comes to the higher resolution image than the photographed image, by executing the series of processing mentioned above. Further, since it is necessary to execute a calculation at a suitable coordinate position at a time of the convolution integral, in the PSF data held by the PSF data holding unit 63, the constitution is made such that the motion per each of the frames is given from the motion estimating unit 22.

In the case that the high-resolution processing of image is executed by using multiple low-resolution images such as the present method, it is necessary that the image in each of the frames has information of the motion at a smaller interval than the spatial sampling interval of the imaging unit 12 described in FIG. 1. In accordance with the present method, it is possible to estimate at a high precision an amount of the motion from the image processing as mentioned above, by utilizing the movement which is generated in the case that the photographer supports the imaging device by the hand for obtaining the motion. In this case, in the case that the velocity of the movement of the imaging device is fast at this time, there is a problem that the movement of the subject becomes large during an exposure period, and a motion blur becomes significant in the image.

Generally, it is hard to intend to realize the high-resolution processing of image from the images with large motion blur, the images having no motion blur or small motion blur are necessary for the high-resolution processing. Therefore, in accordance with the present invention, the moving velocity of the imaging device is detected by the moving velocity detecting unit 13 described in FIG. 1, and the photographing is executed only in the case that the detected velocity is slow with respect to the exposure time of the imaging unit 12. In accordance with the constitution mentioned above, it is possible to obtain only the images having no motion blur or small motion blur, thereby realizing the high-resolution processing. In accordance with the embodiment of the present invention, it is possible to photograph the image group necessary for the high-resolution processing of image without executing any precise position control at a time of photographing so as to generate the high-resolution image by using multiple images.

FIG. 7 is a schematic view showing an imaging system in accordance with the second embodiment of the present invention. The present imaging system 10 is constituted by the optical imaging unit 11, the imaging unit 12, the moving velocity detecting unit 13, the imaging timing deciding unit 14, the image processing unit 15, a photographing-preparation-start-signal generating unit 76, an imaging-device-moving unit 77 and an imaging-device-fixing unit 78. As the imaging-device-fixing unit 78, for example, a tripod or the like can be utilized. The imaging-device-fixing unit 78 holds or supports the imaging-device-moving unit 77, and an imaging device complete set comprising the elements 71 to 76 mentioned above.

If the preparation of photographing is ready, a switch of the photographing-preparation-start-signal generating unit 76 is turned on. A photographing-start-signal is generated on the basis of this operation, and the photographing-start-signal is given to the imaging-device-moving unit 77 and the moving velocity detecting unit 13. The imaging-device-moving unit 77 is provided with an imaging-device-driving unit 81 as shown in FIG. 8. The photographing-start-signal given from the photographing-preparation-start-signal generating unit 76 is input to the imaging-device-driving unit 81 as shown in FIG. 8, and the imaging-device-driving unit 81 starts moving the imaging device in response to the photographing start signal. Further, the moving velocity detecting unit 13 simultaneously starts detecting the moving velocity after receiving the photographing-start-signal.

In accordance with the movement of the imaging device 1 caused by the imaging-device-moving unit 77 at this time, the imaging device is moved only in one certain linear direction, for example, as shown in an explanatory view in FIG. 9. In FIG. 9, the imaging device is reciprocated in a direction of an arrow (a linear direction) by the imaging-device-driving unit 81 using an elastic member. Reference symbol 80 denotes a fixing unit of the imaging-device-driving unit 81 (the elastic member). A rotary motion (a pan motion) of the imaging device may substitute for the movement in the linear direction in the constitution of FIG. 9, if an angle is small.

In the embodiment in accordance with the present invention, the high-resolution processing is executed by using the image having the finer motion than the pixel interval of the imaging element. At this time, it is possible to take a image at a position which is deviated in horizontal and vertical directions without having any mechanism for independently moving the imaging device in each of the horizontal direction and the vertical direction, by making the imaging device orthogonal to an optical axis thereof and photographing while moving the imaging device in one direction which is neither horizontal nor vertical with respect to the imaging device.

In this case, in FIG. 7, the moving velocity at a time when the imaging device is displaced, is detected by the moving velocity detecting unit 13. The constitution in accordance with the present invention is not limited to the detection of the moving velocity at a time when the imaging device is displaced as mentioned above. As described in FIG. 1, the constitution may be made such as to detect the status change at a time when the imaging device is displaced, for example, the ac celeration, calculate the velocity from the history of the direction and the magnitude of the acceleration, and execute the photographing at a time when the calculated velocity becomes smaller than the constant value. Further, in the case that the status change mentioned above is constituted by the velocity, the example that the velocity becomes smaller than the constant value includes the case that the velocity comes to 0. If the imaging is executed in the case that the status change comes to 0, it is possible to obtain the high definition image having no camera shake.

The imaging system 10 of FIG. 7 is provided with the moving velocity detecting unit 13, the imaging timing deciding unit 14, the photographing-preparation-start-signal generating unit 76 and the imaging-device-moving unit 77. The constitution of FIG. 7 is constituted such as to realize an image photography method in accordance with the following procedures (steps) at a time of executing the high-resolution processing of image by using multiple images.

In other words, the image photography method in accordance with the present structure has a step of detecting the status change of the imaging device itself, a step of deciding the imaging timing, a step of generating a signal that starts a series of processing about the imaging, and a step of giving a displacement to the imaging device after having received the signal that starts a series of processing about the imaging, and executes the imaging at a time when the status change of the imaging device becomes smaller than the constant value.

FIG. 10 is an explanatory view of an example using the imaging-device-driving unit 81 of FIG.9. FIG.10(a) shows a tracking at a time of moving the imaging device 1 in one certain diagonal direction. It is known that it is possible to efficiently photograph the images which are deviated little by little in the horizontal and vertical directions by photographing on the tracking as shown in FIG. 10(b). Accordingly, the images in the respective frames are photographed at the positions which are different little by little while displacing in the diagonal direction with respect to the imaging device 1, and the high-resolution processing of the image is executed by using these images.

Further, at this time, it is effectively to employ a method of generating the motion by using an elastic member such as a spring or the like for driving the imaging device and using a vibration thereof. The vibration of the spring is attenuated along with an elapse of the time. Further, since the moving velocity becomes lowest in the different places each time and the moving direction is changed, it is possible to efficiently obtain the motion having the dispersion by photographing at the position. The following operation in the fourth embodiment is the same as the operation of the first embodiment. In accordance with the process of the second embodiment described above, it is possible to realize the function of the first embodiment without holding the imaging device by the hand of the photographer.

FIG. 11 shows a schematic view of an imaging device in accordance with the third embodiment of the present invention. The imaging device shown in FIG. 11 is constituted by the optical imaging unit 11, the imaging unit 12, the moving velocity detecting unit 13, the imaging timing deciding unit 14, the image processing unit 15, a photographing-preparation-start-signal generating unit 116, and an imaging element moving unit 117.

If the preparation of photographing is ready, the switch of the photographing-preparation-start-signal generating unit 116 is turned on. A photographing-start-signal is generated on the basis of this operation, and the photographing-start-signal is given to the imaging element moving unit 117 and the moving velocity detecting unit 13. The imaging element moving unit 117 starts moving the imaging unit 12 after having received the photographing-start-signal, and the moving velocity detecting unit 13 simultaneously starts detecting the moving velocity of the imaging unit 12. The information of the moving velocity is given to the imaging timing deciding unit 14, and the imaging is executed at a time when the moving velocity becomes lower than a certain constant value.

One example of the constitution of the imaging unit 12 and the imaging element moving unit 117 is shown in an explanatory view of FIG. 12. In this case, the imaging element moving unit 117 is constituted by an imaging element moving rail 121, an imaging element fixingunit (fixing-pawl) 122, an imaging element fixing-pawl unlock unit 123 and an imaging element moving spring 124. Further, the imaging element 112 corresponds to the imaging unit 12. If the photographing-start-signal is given to the imaging element fixing-pawl unlock unit 123, the imaging element fixing unit 122 which has fixed the imaging element till then is disconnected from the imaging element 112 , and the imaging element 112 starts an amplitude motion along the rail on the basis of an elastic force of the imaging element moving spring 124.

In the case of this constitution, since the moving velocity of the imaging element 112 becomes lowest at a time when the moving direction is changed, the photographing is executed at this time. Since the vibration of the imaging element moving spring 124 is attenuated little by little, a difference is generated little by little in the position where the photographing is executed. The following operations are the same as the first embodiment. In accordance with the present embodiment, it is possible to photograph the image having the displacement without depending on the holding and fixing method of the imaging device, by detecting the displacement of the imaging element not the imaging device itself.

In this case, in FIG. 11, the moving velocity at a time when the imaging unit 12 is displaced is detected by the moving velocity detecting unit 13. The constitution of the present invention is not limited to the detection of the moving velocity at a time when the imaging device is displaced as mentioned above. In the same manner as described in FIGs. 1 and 7, the constitution may be made such as to detect the status change at a time when the imaging device itself or the imaging unit is displaced, for example, the acceleration, calculate the velocity on the basis of the history of the direction and the magnitude of the acceleration, and execute the imaging at a time when the calculated velocity becomes smaller than the constant value. Further, in the case that the status change mentioned above is constituted by the velocity, the example that the velocity becomes smaller than the constant value includes a case that the velocity comes to 0. If the imaging is executed in the case that the velocity comes to 0, it is possible to obtain the high definition image having no camera shake.

It is possible to constitute a different imaging system from FIG. 7 by fixing the imaging device described in FIG. 11 by the imaging-device-fixing unit 78 described in FIG. 7. In this case, in the same manner as the imaging system of FIG. 7, it is possible to realize the high-resolution processing of the photographed images without holding the imaging device by the hand of the photographer.

The imaging device of FIG. 11 is provided with the moving velocity detecting unit 13, the imaging timing deciding unit 14, the image processing unit 15, the photographing-preparation-start-signal generating unit 116 and the imaging element moving unit 117. The constitution of FIG. 11 is constituted such as to realize an image photography method in accordance with the following procedures (steps) at a time of performing the high-resolution processing of image by using multiple images. In other words, the constitution has a step of generating a signal that starts a series of processing about the imaging, a step of giving a spatial displacement to the imaging element after having received the signal that starts a series of processing about the imaging, a step of detecting a status change of the imaging element, and a step of deciding an imaging timing, and executes the imaging at a suitable timing while taking into consideration the status change of the imaging element.

FIG. 13 is a schematic view showing an imaging device in accordance with the fourth embodiment of the present invention. This imaging device is constituted by the optical imaging unit 11, the imaging unit 12, the imaging timing deciding unit 14, the image processing unit 15, the photographing-preparation-start-signal generating unit 116, the imaging element moving unit 117, the relative velocity detecting unit 133 and the optical element moving unit 138. In the present embodiment, each of the imaging element moving unit 117 and the optical element moving unit 138 starts displacing after having received the photographing-start-signal from the photographing-preparation-start-signal generating unit 116. The relative velocity detecting unit 133 starts detecting the relative velocity between the imaging element and the optical element.

In this case, the imaging element moving unit 117 and the optical element moving unit 138 respectively displace the imaging unit 12 and the optical imaging unit 11 in the same direction at different initial velocity and acceleration. The photographing is executed by detecting the relative velocity information between the imaging unit 12 and the optical imaging unit 11 by the relative velocity detecting unit 133, transmitting the relative velocity information to the imaging timing deciding unit 14, and giving the photographing signal to the imaging unit 12 at such a timing that the relative velocity becomes smaller than a certain constant value. At this time, since the imaging unit 12 and the optical imaging unit 11 are different in the acceleration, there is generated a moment when the relative velocity comes to 0 . Accordingly, the photographing is executed by the imaging timing deciding unit 14 after detecting the moment or a timing close to the moment.

In this case, on the assumption that the imaging unit 12 and the optical imaging unit 11 simultaneously start moving, reference symbol $v_1$ denotes a velocity of the optical imaging unit 11 at a time t, reference symbol $v_2$ denotes a velocity of the imaging unit 12 at the time t, reference symbol $v_{01}$ denotes an initial velocity of the optical imaging unit 11, reference symbol $V_{02}$ denotes an initial velocity of the imaging unit 12, reference symbol $a_1$ denotes an acceleration of the optical imaging unit 11, and reference symbol $a_2$ denotes an acceleration of the imaging unit 12, since the respective velocity at the time t can be expressed by the following Expression 6 and the following Expression 7, the time t at which the relative velocity comes to 0, that is, a relation $v_1 = v_2$ is established, is expressed by the following Expression 8.

[Expression 6]

$$v_1 = v_{01} + a_1 t$$

[Expression 7]

$$v_2 = v_{02} + a_2 t$$

[Expression 8]

$$t = \frac{v_{01} - v_{02}}{a_2 - a_1}$$

Further, it is assumed that each of the parameters mentioned above, the respective starting position and the like are given in such a manner that the position relation between the both comes to a status capable of imaging, that is, a status in which the optical image of the subject is imaged on the imaging element. The subsequent operations are the same as the first embodiment. FIG. 14 is a schematic view of an image processing unit 15 in accordance with the fourth embodiment of the present invention, and has the same constitution as FIG. 2. An image Q having a higher resolution than the image photographed by the imaging unit 12 is generated and output from the super-resolution processing unit 23.

FIG. 15 is an explanatory view showing an example of the position relation between the optical element and the imaging element in the imaging device in accordance with the fourth embodiment of the present invention. FIG. 15 (a) shows the position relation between the optical element and the imaging element before starting the photographing, and FIG. 15 (b) shows the position relation between the optical element and the imaging element at a time of photographing. The imaging element 2 is linearly moved in a direction of an arrow La toward the imaging optical system 3 from the position in FIG. 15 (a). Further, the imaging optical system 3 (the optical element) is linearly moved in a direction of an arrow Lb. The direction La and the direction Lb are the same direction, and are an approximately vertical direction to the optical axis. Accordingly, the imaging element and the optical image forming means are given the displacement in one linear direction which is approximately vertical to the optical axis. As mentioned above, since the direction La and the direction Lb are the same direction, and the imaging element 2 and the optical element have the different accelerations, the imaging element 2 is arranged so as to be lapped over the position of the imaging optical system 3 at a time of imaging, as shown in FIG. 15(b).

The present embodiment detects the relative change between the imaging element and the optical element in place of the status change of the imaging device itself in the same manner as the third embodiment. Accordingly, it is possible to obtain multiple images having the small image shake as described in the first embodiment, without depending on the holding and fixing method of the imaging device, whereby it is possible to realize the high-resolution processing.

In this case, the embodiments in FIGs. 13 to 15 detect the relative velocity between the both on the basis of the initial velocity and the acceleration of the imaging element and the optical element, however, the constitution may be made such as to detect the other relative changes than the acceleration between the both, at a time of giving the spatial displacement to the imaging element and the optical element.

It is possible to constitute a different imaging system from FIG. 7 by fixing the imaging device described in FIG. 13 by the imaging-device-fixing unit 78 as described in FIG. 7. In this case, in the same manner as the imaging system in FIG. 7 , it is possible to realize the high-resolution processing of the photographed image without holding the imaging device by the hand of the photographer.

The imaging device of FIG. 13 is provided with the imaging timing deciding unit 14, the photographing-preparation-start-signal generating unit 116, the imaging element moving unit 117, the relative velocity detecting unit 133, and the optical element moving unit 138. The constitution of FIG. 13 is made such as to realize the image photography method in accordance with the following procedures (steps) at a time of performing the high-resolution processing of image by using multiple images. In other words, the constitution has a step of generating a signal that starts a series of processing about the imaging, a step of giving a spatial displacement to an imaging element, a step of giving a spatial displacement in the same direction as said imaging element and in a different status from said imaging element to a part or a whole of an imaging optical system, a step of detecting a relative change between the imaging element and the imaging optical system, and a step of deciding an imaging timing, and executes the imaging at an optimum timing while taking into consideration the relative change between the imaging element and the optical system.

FIG. 16 shows a schematic view of an imaging device in accordance with the fifth embodiment of the present invention. The imaging device in accordance with the present embodiment is constituted by the optical imaging unit 11, the imaging unit 12, the imaging timing deciding unit 14, the image processing unit 15 , the photographing-preparation-start-signal generating unit 116, the imaging element moving unit 117, the optical element moving unit 138, a relative velocity detecting unit 163 and a motion measuring unit 169.

In FIG. 16, since the spatial position of the imaging unit 12 at a time of executing the photographing can be known by the motion measuring unit 169, the high-resolution processing is executed by the image processing unit 15 by giving the spatial position of the imaging unit 12 to the image processing unit 15 and using this information. The constitution of the image processing unit 15 is constituted by an image storage unit 171 and a super-resolution processing unit 172, for example, as shown by a schematic view in FIG. 17. The image data information from the imaging unit 12 is given to the image storage unit 171. Further, the motion data measured by the motion measuring unit 169 is input to the super-resolution processing unit 172.

The super-resolution processing unit 172 executes the super-resolution processing described in the first embodiment on the basis of the motion data and the image data given from the image storage unit 171, and outputs an image R which is high-resolution processed. In accordance with the constitution mentioned above, since the means for executing the estimation particularly about the position information is not necessary within the image processing unit 15 in the present embodiment, it is possible to make a circuit scale small. Further, since the motion is not estimated by being computed from the image, but the motion is actually measured, it is possible to acquire the accurate information of the relative position regardless of the kind of the image.

It is possible to constitute a different imaging system from FIG. 7 by fixing the imaging device described in FIG. 16 by the imaging-device-fixing unit 78 as described in FIG. 7. In this case, in the same manner as the imaging system in FIG. 7, it is possible to realize the high-resolution processing of the photographed image without holding the imaging device by the hand of the photographer.

The imaging device of FIG. 16 is provided with the imaging timing deciding unit 14, the image processing unit 15, the photographing-preparation-start-signal generating unit 116, the imaging element moving unit 117, and the motion measuring unit 169. The constitution of FIG. 16 is made such as to realize the image photography method in accordance with the following procedures (steps) at a time of performing the high-resolution processing of the image by using multiple images. In other words, the constitution has a step of generating a signal that starts a series of processing about the imaging, a step of giving a spatial displacement to an imaging element, a step of giving a spatial displacement in the same direction as said imaging element and in a different status from said imaging element to a part or a whole of an imaging optical system, a step of detecting a relative change between the imaging element and the imaging optical system, a step of deciding an imaging timing, and a step of measuring a spatial position of said imaging element when the imaging is performed, and executes the imaging at an optimum timing while taking into consideration the relative change between the imaging element and the optical system.

FIG. 18 is a schematic view showing an imaging device in accordance with the sixth embodiment of the present invention. The present imaging device is constituted by the optical imaging unit 11, the imaging unit 12, the imaging timing deciding unit 14, the image processing unit 15, the photographing -preparation-start-signal generating unit 116, the imaging element moving unit 117, the optical element moving unit 138, the relative velocity detecting unit 163, the motion measuring unit 169 and a high-resolution determining unit 1810.

The spatial position of the imaging unit 12 at a time of executing the photographing can be measured by the motion measuring unit 169, the information is transmitted to the high-resolution determining unit 1810. The high-resolution determining unit 1810 determines whether or not it is possible to execute a desired high-resolution processing by the image processing unit 15, on the basis of the transmitted information. In the case that it is possible to execute the high-resolution processing, the high-resolution processing start signal is transmitted to the image processing unit 15, and the high-resolution processing is executed by the image processing unit 15. A basis for determining whether or not the high-resolution processing is executed is constituted by an unequal distribution degree of the motion of the image.

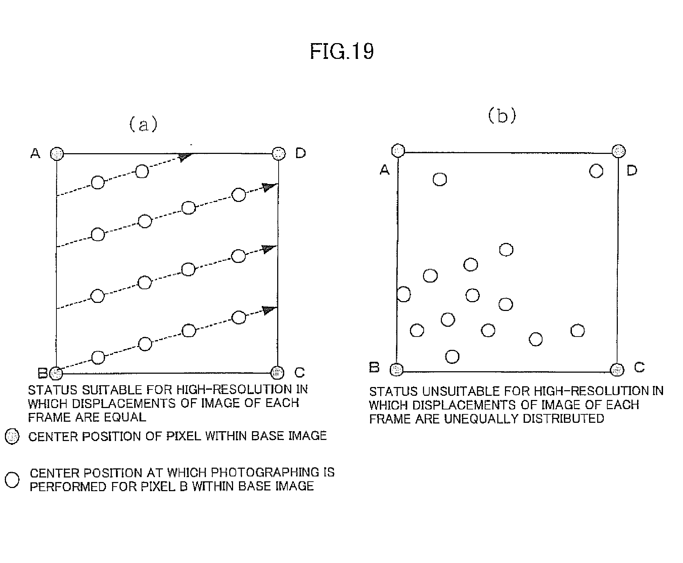

FIG. 19 is an explanatory view showing an example of an unequal distribution degree which is not suitable for an unequal distribution degree of the motion suitable for the high-resolution processing. Since FIG. 19(a) has the motions which are equally dispersed within the pixel interval of the imaging element, FIG. 19(a) is said to be suitable for the high-resolution processing. Further, a dispersion degree here depends on an image quality after being constructed. In the case of constructing an image having a higher image quality, a small unequal distribution, that is, an equal dispersion is suitable.

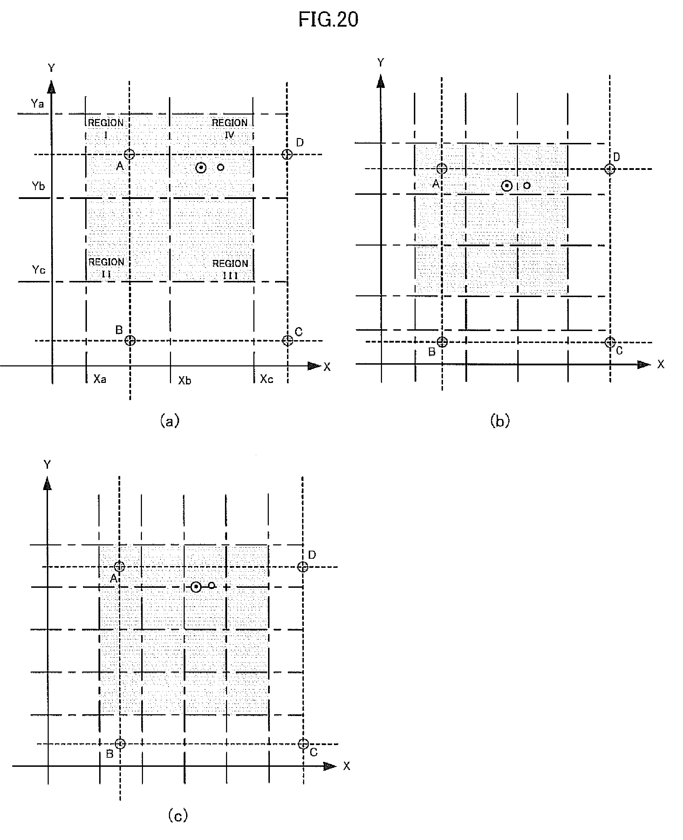

FIG. 20 is an explanatory view with respect to a determination of a belonging-region of the motion. For example, in the case of enlarging the image twice vertically and horizontally, it is considered to be preferable that there exists an image having motions respectively belonging to four regions I, II, III and IV which are obtained by dividing per one pixel interval of the photographing image (the low-resolution image), as shown in FIG. 20(a). Accordingly, it is said that the closer to the even the number of images belonging to each of the regions is, the more ideal for the high-resolution processing the number of image is. In the same manner, in the case that it is intended to enlarge three times vertically and horizontally, it is desirable that the number of images belonging to nine regions obtained by dividing into three sections vertically and horizontally is close to the even as shown in FIG. 20(b).

Further, in the case that it is intended to enlarge four times vertically and horizontally, it is desirable that the number of images belonging to sixteen regions obtained by dividing into four sections vertically and horizontally is close to the even as shown in FIG. 20 (c) . Further, even if the number of images belonging to each of the regions has a difference, it is possible to use only approximately the same number of images belonging to each of the regions without using all the images. However, in the case that the number of the region in which no image exists within the region is large, it is said that there is generated a status which is not suitable for the high-resolution processing.

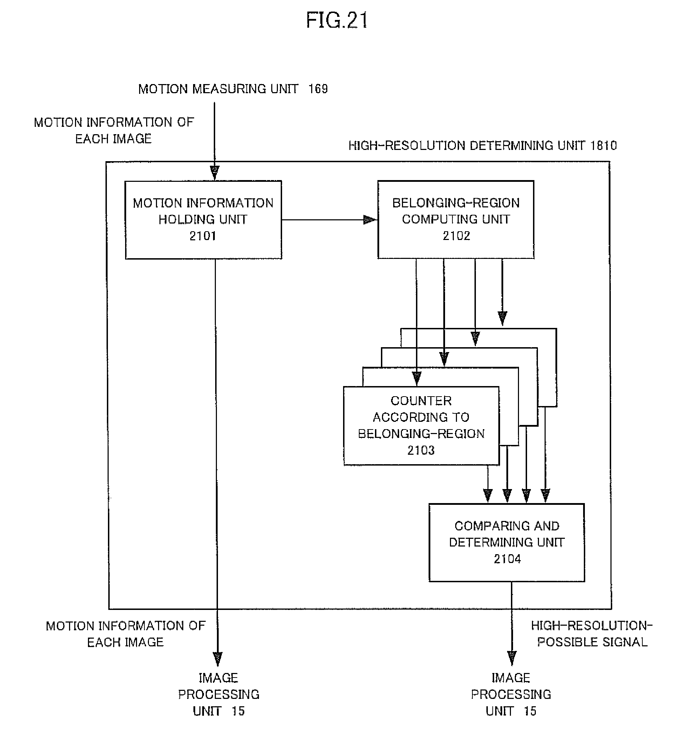

The high-resolution determining unit 1810 is constituted by a motion information holding unit 2101, a belonging-region computing unit 2102, a counter according to belonging-region 2103 and a comparing and determining unit 2104, for example, as shown in a schematic view of FIG. 21. The information of the motion of each of the frame images given from the motion measuring unit 169 is given to the motion information holding unit 2101, the information per each of the frames is held there, and the information held in the motion information holding unit 2101 is given to the belong region computing portion 2102. The belonging-region computing unit 2102 determines horizontal and vertical coordinate positions of the photographed image to be determined, for example, on the basis of the given motion information, and determines what region the image belongs in FIG. 20(a).

In FIG. 20(a), on the assumption that reference symbol O denotes a center position of a marked pixel of the low-res olution image (the photographed image) to be determined the belonging region, and reference symbols A, B, C and D denote center positions of the pixel of the low-resolution image (the photographed image) forming the basis, if both the images have no movement, it is assumed that O and A completely coincide.

In FIG. 20(a), the regions I, II, III and IV can be respectively defined as follows.

$$\text{Region I: } x_a \le x < x_b, \; y_a \le y < y_b$$

$$\text{Region II: } x_a \le x < x_b, \; y_b \le y < y_c$$

$$\text{Region III: } x_b \le x < x_c, \; y_b \le y < y_c$$

$$\text{Region IV: } x_b \le x < x_c, \; y_a \le y < y_b$$

Further, it is determined that 0 (the photographed image to be determined) enters into the region IV.

A result obtained by determining as mentioned above can be given as a signal to each counter according to belonging-region 2103 . In the case of receiving the signal, each counter according to belonging-region 2103 increases a count value in increments of 1 . In the case that a difference between the counter according to belonging-region values is smaller than a constant value by comparing the respective counter according to belonging-region values, the comparing and determining unit 2104 generates the high-resolution processing signal, and gives the high-resolution processing signal to the image processing unit 15. Alternatively, in the case that the region in which the counter value is 0 occupies one half or more of the whole, the comparing and determining unit 2104 determines that it is not suitable for the high-resolution processing, and does not generate the high-resolution processing signal. The high-resolution processing signal is transmitted to the image processing unit 15.

As shown in a schematic view of FIG. 22, the high-resolution processing start signal is input to the signal conforming portion 221 in the image processing unit 15. To the signal confirming unit 221, the photographed image information is given from the image storage unit 21 and the motion information is given from the motion measuring unit 169 in addition to the high-resolution processing start signal. If it is possible to confirm by the signal confirming unit 221 that three signals comprising the high-resolution processing start signal, the image information and the motion information are prepared, the motion information and the photographed image information are transmitted to the super-resolution processing unit 23, and the super-resolution processing is started by the super-resolution processing unit 23. In the case that three signals are not prepared, the signal conforming portion 221 generates an error signal so as to inform the photographer, and does not transmit the motion information and the photographed image information to the super-resolution processing unit 23 without starting the super-resolution processing.

The subsequent processes are the same as the first to fifth embodiments. Further, as a modified embodiment of the present embodiment, the constitution may be made, as shown by a schematic view of FIG. 23, such that the motion estimating unit 22 serves as the motion measuring unit 169 in FIG. 18. In accordance with the present embodiment, since it is possible to determine whether or not the distribution of the motions of the images photographed for the high-resolution processing is suitable for the high-resolution processing, it is possible to construct the high-resolution image having the high image quality at a high probability in the case of executing the high-resolution processing. In this case, the constitution that the signal confirming unit 221 generates the error signal so as to inform the photographer as mentioned above, thereby not starting the super-resolution processing is not limited to the constitutions in FIGs . 18 to 23, but may be applied to the constitutionss in FIGs. 1 to 17.

FIGs. 18 to 23 correspond to the constitutionss of the imaging devices, however, it is possible to constitute the imaging system by fixing the imaging devices to the imaging-device-fixing unit 78 described in FIG. 7.

Further, the imaging device in FIGs. 18 and 22 has the optical imaging unit 11, the imaging unit 12, the imaging timing deciding unit 14, the image processing unit 15, the photographing-preparation-start-signal generating unit 116, the imaging element moving unit 117 , the optical element moving unit 138, the relative velocity detecting unit 163, the motion measuring unit 169, the high-resolution determining unit 1810, and a signal confirming unit 221. The constitutions of FIGs . 18 and 22 are made such as to realize the image photography method in accordance with the following procedures (steps) at a time of performing the high-resolution processing of the image by using multiple images. In other words, the constitution has a step of generating a signal that starts a series of processing about the imaging, a step of giving a spatial displacement to an imaging element, a step of giving a spatial displacement in the same direction as said imaging element and in a different status from said imaging element to a part or a whole of an imaging optical system, a step of detecting a relative change between the imaging element and the imaging optical system, a step of deciding an imaging timing, and a step of estimating a spatial position of the imaging element at a time of executing the photographing, and a step of determining whether it is possible to construct a high-resolution image or not, and informing a photographer, and executes the imaging at a time when the relative change between the imaging element and the optical system becomes smaller than the constant value.

INDUSTRIAL APPLICABILITY

As described above, in accordance with the present invention, there can be provided the imaging device, the imaging system and the image photography method in which it is possible to take multiple images having the pixel shifts without necessity of the accurate positioning mechanism of the optical system or the imaging element, and it is possible to construct the image having the higher resolution than the photographed images, by using these images.

Further, in the present invention, it is possible to photograph multiple images having the pixel shifts without necessity of the accurate positioning mechanism of the optical system or the imaging element, and it is possible to construct the image having the higher resolution than the photographed images, by using these images.

<The List of References>

Patent Document 1:
Japanese Patent Publication No. H11-75099

**Claims**

1.  An imaging device which obtains an image of a subject electronically, comprising:

    an optical imaging means for imaging said image of said subject;
    an imaging means for converting an image imaged optically into an image signal that is discretized spatially and is sampled;
    a high-resolution processing means for generating a high-resolution image from image signals of multiple frames sampled by said imaging means;
    a status change detecting means for detecting a status change of said imaging device itself; and
    an imaging timing deciding means for deciding an imaging timing,
    wherein said imaging timing deciding means takes into consideration said status change of said imaging device itself detected by said status change detecting means, and decides said imaging timing for obtaining image signals of suitable frames for generating said high-resolution image by said high-resolution processing means.

2.  An imaging device which obtains an image of a subject electronically, comprising:

    an optical imaging means for imaging said image of said subject;
    an imaging element for converting an image imaged optically into an image signal that is discretized spatially and is sampled;
    a high-resolution processing means for generating a high-resolution image from image signals of multiple frames sampled by said imaging element;
    an imaging timing deciding means for deciding an imaging timing;
    a means for giving a spatial displacement to said imaging element; and
    a means for detecting a status change of said imaging element;
    wherein said imaging timing deciding means takes into consideration said status change of saidimaging element detected by saidmeans for detecting a status change of said imaging element, and decides said imaging timing for obtaining image signals of suitable frames for generating said high-resolution image by said high-resolution processing means.

3.  An imaging device according to Claims 1 or 2, wherein said status change is a velocity.

4.  An imaging device according to Claims 1 or 2, wherein said status change is an acceleration.

5.  An imaging device according to Claim 3, wherein the imaging is performed at a time when said velocity is 0.

6.  An imaging device according to any one of Claims 2 to 5, wherein said imaging element is given a displacement in one linear direction that is approximately vertical to an optical axis.

7.  An imaging device which obtains an image of a subject electronically, comprising:

    an optical imaging means for imaging said image of said subject;
    an imaging element for converting an image imaged optically into an image signal that is discretized spatially and is sampled;
    a high-resolution processing means for generating a high-resolution image from image signals of multiple frames sampled by said imaging element;
    an imaging timing deciding means for deciding an imaging timing;
    a means for giving a spatial displacement to said imaging element;
    a means for giving a spatial displacement in the same direction as said imaging element and in a different status from said imaging element to said optical imaging means; and
    a relative change detecting means for detecting a relative change between said imaging element and said optical imaging means,
    wherein said imaging timing deciding means takes into consideration said relative change detected by said relative change detecting means, and decides said imaging timing for obtaining image signals of suitable frames for generating said high-resolution image by said high-resolution processing means.

8.  An imaging device according to Claim 7, wherein said relative change is a relative velocity, and the imaging is performed at a time when said relative velocity is 0.

9. An imaging device according to Claim 7, wherein said relative change is a relative acceleration.

10. An imaging device according to any one of Claims 7 to 9, wherein said imaging element and said optical imaging means are given a displacement in one linear direction that is approximately vertical to an optical axis.

11. An imaging device according to any one of Claims 2 to 10, further comprising a means for measuring amount of displacement of said imaging element.

12. An imaging device according to Claims 2 or 7, wherein said means for giving a spatial displacement is an elastic member.

13. An imaging device according to any one of Claims 1 to 12, wherein said high-resolution processing means comprises a function that determines whether it is possible to construct a high-resolution image with a desired enlarging magnification or not, and informs a photographer.

14. An imaging system comprising:

an imaging device having an optical imaging means for imaging said image of said subject, an imaging means for converting an image imaged optically into an image signal that is discretized spatially and is sampled, a high-resolution processing means for generating a high-resolution image from image signals of multiple frames sampled by said imaging means, a status change detecting means for detecting a status change of said imaging device itself, and an imaging timing deciding means for deciding an imaging timing;
an imaging device moving means for giving a displacement to said imaging device; and
a fixing means for holding or supporting said imaging device and said imaging device moving means,
wherein said imaging timing deciding means takes into consideration said status change of said imaging device itself detected by said status change detecting means, and decides said imaging timing for obtaining image signals of suitable frames for generating said high-resolution image by said high-resolution processing means.

15. An imaging system comprising:

an imaging device having an optical imaging means for imaging said image of said subject, an imaging element for converting an image imaged optically into an image signal that is discretized spatially and is sampled, a high-resolution processing means for generating a high-resolution image from image signals of multiple frames sampled by said imaging element, an imaging timing deciding means for deciding an imaging timing, a means for giving a spatial displacement to said imaging element, and a means for detecting a status change of said imaging element; and
a fixing means for holding or supporting said imaging device,
wherein said imaging timing deciding means takes into consideration said status change of said imaging element detected by saidmeans for detecting a status change of said imaging element, and decides said imaging timing for obtaining image signals of suitable frames for generating said high-resolution image by said high-resolution processing means.

16. An imaging system comprising:

an imaging device having an optical imaging means for imaging said image of said subject, an imaging element for converting an image imaged optically into an image signal that is discretized spatially and is sampled, a high-resolution processing means for generating a high-resolution image from image signals of multiple frames sampled by said imaging element, an imaging timing deciding means for deciding an imaging timing, a means for giving a spatial displacement to said imaging element, a means for giving a spatial displacement in the same direction as said imaging element and in a different status from said imaging element to said optical imaging means, and a relative change detecting means for detecting a relative change between said imaging element and said optical imaging means; and
a fixing means for holding or supporting said imaging device,
wherein said imaging timing deciding means takes into consideration said relative change detected by said relative change detecting means, and decides said imaging timing for obtaining image signals of suitable frames for generating said high-resolution image by said high-resolution processing means.

17. An imaging system comprising:

an imaging device having an optical imaging means for imaging said image of said subject, an imaging element for converting an image imaged optically into an image signal that is discretized spatially and is sampled, a high-resolution processing means for generating a high-resolution image from image signals of multiple frames sampled by said imaging element, an imaging timing deciding means for deciding an imaging timing, a means f or giving a spatial displacement to said imaging element, a means for giving a spatial displacement in the same direction as said imaging element and in a different status from said imaging element to said optical imaging means, a relative change detecting means for detecting a relative change between said imaging element and said optical imaging means, and a means for measuring a spatial position of said imaging element when the imaging is performed; and

a fixing means for holding or supporting said imaging device,
wherein said imaging timing deciding means takes into consideration said relative change detected by said relative change detecting means, and decides said imaging timing for obtaining image signals of suitable frames for generating said high-resolution image by said high-resolution processing means.

18. An imaging system according to Claims 14 or 15, wherein said status change is a velocity or an acceleration.

19. An imaging system according to Claims 16 or 17, wherein said relative change is a relative velocity or a relative acceleration.

20. An imaging system according to any one of Claims 14 to 19, wherein said imaging device is given a displacement in one linear direction that is approximately vertical to an optical axis.

21. An imaging system according to any one of Claims 14 to 20, wherein said means for giving a spatial displacement is an elastic member.

22. An imaging system according to any one of Claims 14 to 21, wherein said high-resolution processing means comprises a function that determines whether it is possible to construct a high-resolution image with a desired enlarging magnification or not, and informs a photographer.

23. A photography method of image which is based on a presupposition that a high-resolution image is constructed by using multiple images, comprising:

a step of detecting a status change of an imaging device itself; and
a step of deciding an imaging timing,
wherein said status change of said imaging device is considered and the imaging is performed at a suitable timing.

24. A photography method of image according to Claim 23, further comprising:

a step of generating a signal that starts a series of processing about the imaging; and
a step of giving a displacement to said imaging device after having received said signal that starts a series of processing about the imaging.

25. A photography method of image according to Claims 23 or 24, further comprising:

a step of giving a displacement in one linear direction that is approximately vertical to an optical axis to said imaging device.

26. A photography method of image which is based on a presupposition that a high-resolution image is constructed by using multiple images, comprising:

a step of generating a signal that starts a series of processing about the imaging;
a step of giving a spatial displacement to an imaging element after having received said signal that starts a series of processing about the imaging;
a step of detecting a status change of said imaging element; and
a step of deciding an imaging timing,
wherein detected status change of said imaging element is considered and the imaging is performed at a suitable timing.

**27.** A photography method of image according to Claim 26, further comprising:

a step of giving a displacement in one linear direction that is approximately vertical to an optical axis to said imaging element.

**28.** A photography method of image which is based on a presupposition that a high-resolution image is constructed by using multiple images, comprising:

a step of generating a signal that starts a series of processing about the imaging;
a step of giving a spatial displacement to an imaging element and giving a spatial displacement in the same direction as said imaging element and in a different status from said imaging element to a part or a whole of an imaging optical system after having received said signal that starts a series of processing about the imaging;
a step of detecting a relative change between said imaging element and said imaging optical system; and
a step of deciding an imaging timing,
wherein said relative change between said imaging element and said imaging optical system is considered and the imaging is performed at a suitable timing.

**29.** A photography method of image which is based on a presupposition that a high-resolution image is constructed by using multiple images, comprising:

a step of generating a signal that starts a series of processing about the imaging;
a step of giving a spatial displacement to an imaging element;
a step of giving a spatial displacement in the same direction as said imaging element and in a different status from said imaging element to a part or a whole of an imaging optical system;
a step of detecting a relative change between said imaging element and said imaging optical system;
a step of deciding an imaging timing; and
a step of measuring a spatial position of said imaging element when the imaging is performed,
wherein the imaging is performed at a time when said relative change between said imaging element and said imaging optical system becomes smaller than a constant value.

**30.** A photography method of image according to Claims 28 or 29, further comprising:

a step of giving a displacement in one linear direction that is approximately vertical to an optical axis to said imaging element and a part or a whole of said imaging optical system.

**31.** A photography method of image according to any one of Claims 28 to 30, said step of detecting a relative change between said imaging element and said imaging optical system is a step of detecting an acceleration.

**32.** A photography method of image according to any one of Claims 23 to 31, further comprising:

a step of measuring amount of displacement of said imaging element.

**33.** A photography method of image according to any one of claims 23 to 32, further comprising:

a step of determining whether it is possible to construct a high-resolution image or not, and informing a photographer.

# FIG.1

OPTICAL IMAGING UNIT 11

IMAGING UNIT 12

IMAGE PROCESSING UNIT 15

MOVING VELOCITY DETECTING UNIT 13

IMAGING TIMING DECIDING UNIT 14

# FIG.2

IMAGING UNIT 12

MOTION ESTIMATING UNIT 22

IMAGE STORAGE UNIT 21

SUPER-RESOLUTION PROCESSING UNIT 23

IMAGE PROCESSING UNIT 15

P

23

FIG.3

```
                    ┌─────────┐
                    │  START  │
                    └─────────┘
                         │
                         ▼
          ┌──────────────────────────────┐
   S1     │      READ A BASE IMAGE        │
          └──────────────────────────────┘
                         │
                         ▼
          ┌──────────────────────────────┐
   S2     │      DEFORM THE BASE          │
          │   IMAGE WITH MULTIPLE         │
          │         MOTIONS               │
          └──────────────────────────────┘
                         │
                         ▼
          ┌──────────────────────────────┐
   S3     │      READ A REFERENCE         │◄──────┐
          │          IMAGE                │       │
          └──────────────────────────────┘       │
                         │                        │
                         ▼                        │
          ┌──────────────────────────────┐        │
   S4     │       CALCULATE A            │        │
          │      PLURALITY OF            │        │
          │    SIMILARITY VALUES         │        │
          └──────────────────────────────┘        │
                         │            ┌────────────────────────┐
                         ▼            │   INCREASE THE         │
          ┌──────────────────────┐    │  FRAME NUMBER OF       │  S8
   S5     │ GENERATE SIMILARITY  │    │   THE REFERENCE        │
          │        MAP           │    │ IMAGE ONE BY ONE       │
          └──────────────────────┘    └────────────────────────┘
                         │                        ▲
                         ▼                        │
   ┌──────────────────────────────────────────┐  │
   │ INTERPOLATION OF SIMILARITY MAP           │  │
S6 │ ESTIMATION OF EXTREME VALUE               │  │
   │ (MOTION ESTIMATION VALUE)                 │  │
   └──────────────────────────────────────────┘  │
                         │                        │
                         ▼                        │
                      ╱╲      N                   │
   S7         ╱ IS IT ALL IMAGES ? ╲──────────────┘
                      ╲╱
                         │ Y
                         ▼
                    ┌─────────┐
                    │   END   │
                    └─────────┘
```

FIG.4

SIMILARITY

INTERPOLATED
SIMILARITY

DISCRETE SIMILARITY
VALUE

EXTREME VALUE
OF SIMILARITY

DEFORMING MOTION PARAMETER

# FIG.5

START

S11 | READ LOW-RESOLUTION IMAGE y

S12 | GENERATE INITIAL ESTIMATED IMAGE z FROM BASE FRAME

S13 | MOTION

S14 | PSF

S15 |
$$\text{MINIMIZE } f(z)$$
$$f(z) = \sum_{K=1}^{M} \|y_k - A_k z\|^2 = \|y - Az\|^2$$

S16 | IS IT MINIMIZED ?

S17 | UPDATE HIGH-RESOLUTION IMAGE z

N

Y

END

# FIG.6

IMAGE STORAGE UNIT 21

MOTION ESTIMATING UNIT 22

SUPER-RESOLUTION PROCESSING UNIT 23

LOW-RESOLUTION IMAGE THAT IS A BASE FRAME

ALL LOW-RESOLUTION IMAGES

MOTION INFORMATION

INTERATIVE DETERMINING VALUE HOLDING UNIT 611

INTERPOLATION ENLARGEMENT UNIT 61

PSF DATA HOLDING UNIT 63

INTERATIVE COMPUTATION DETERMINING UNIT 610

CONVOLUTION INTEGRAL UNIT 62

IMAGE COMPARING UNIT 64

MULTIPLICATION UNIT 65

ASSEMBLING ADDITION UNIT 66

IMAGE STORAGE UNIT 69

STORAGE ADDITION UNIT 67

UPDATE IMAGE GENERATING UNIT 68

EP 1 816 854 A1

## FIG.7

IMAGING SYSTEM 10

OPTICAL IMAGING UNIT 11

IMAGING UNIT 12

IMAGE PROCESSING UNIT 15

MOVING VELOCITY DETECTING UNIT 13

IMAGING TIMING DECIDING UNIT 14

PHOTOGRAPHING-PREPARATION-START-SIGNAL GENERATING UNIT 76

IMAGING-DEVICE-MOVING UNIT 77

IMAGING-DEVICE-FIXING UNIT 78

## FIG.8

PHOTOGRAPHING-PREPARATION-START-SIGNAL GENERATING UNIT 76

IMAGING-DEVICE-MOVING UNIT 77

IMAGING-DEVICE-DRIVING UNIT 81

FIG.9

IMAGING DEVICE 1

IMAGING-DEVICE-
DRIVING UNIT

81

80

77

IMAGING-DEVICE-
MOVING UNIT

FIG.10

(a)

(b)

A B C D

POSITION OF PIXEL WITHIN BASE IMAGE

POSITION AT WHICH PHOTOGRAPHING IS PERFORMED
FOR PIXEL B WITHIN BASE IMAGE

## FIG.11

## FIG.12

IMAGING ELEMENT MOVING RAIL 121

IMAGING ELEMENT 112

IMAGING ELEMENT
FIXING-PAWL UNLOCK
UNIT 123

IMAGING ELEMENT
DRIVING SPRING 124

IMAGING ELEMENT
FIXING-PAWL 122

FIG.13

```
┌─────────────────────┐
│  PHOTOGRAPHING-     │
│  PREPARATION-START- │
│  SIGNAL GENERATING  │
│  UNIT        116    │
└─────────────────────┘
```

```
┌─────────────────┐
│  RELATIVE       │
│  VELOCITY       │
│  DETECTING UNIT │
│       133       │
└─────────────────┘
```

```
┌─────────────────────┐
│  IMAGING TIMING     │
│  DECIDING UNIT   14 │
└─────────────────────┘
```

```
┌─────────────┐
│  OPTICAL    │
│  ELEMENT    │
│  MOVING UNIT│
│     138     │
└─────────────┘
```

```
┌─────────────┐
│  IMAGING    │
│  ELEMENT    │
│  MOVING UNIT│
│     117     │
└─────────────┘
```

OPTICAL
IMAGING UNIT
11

```
┌─────────────────┐
│  IMAGING UNIT   │
│       12        │
└─────────────────┘
```

```
┌─────────────┐
│  IMAGE      │
│  PROCESSING │
│  UNIT       │
│     15      │
└─────────────┘
```

FIG.14

IMAGING UNIT
12

```
┌─────────────────┐
│  MOTION         │
│  ESTIMATING     │
│  UNIT    22     │
└─────────────────┘
```

```
┌─────────────┐
│  IMAGE      │
│  STORAGE    │
│  UNIT 21    │
└─────────────┘
```

```
┌──────────────────────┐
│  SUPER-RESOLUTION    │
│  PROCESSING UNIT     │
│              23      │
└──────────────────────┘
```

IMAGE PROCESSING UNIT 15

Q

FIG.15

IMAGING OPTICAL 3
SYSTEM

L a

L b

IMAGING 2
ELEMENT

(a)

IMAGING OPTICAL
SYSTEM

3

IMAGING 2
ELEMENT

(b) POSITION RELATION
AT THE TIME OF PHOTOGRAPHING

FIG.16

PHOTOGRAPHING-
PREPARATION-START-
SIGNAL GENERATING
UNIT 116

RELATIVE
VELOCITY
DETECTING UNIT
163

IMAGING TIMING
DECIDING UNIT 14

OPTICAL
ELEMENT
MOVING UNIT
138

IMAGING
ELEMENT
MOVING UNIT
117

MOTION
MEASURING
UNIT 169

IMAGING UNIT 12

IMAGE
PROCESSING
UNIT 15

OPTICAL
IMAGING UNIT
11

FIG.17

IMAGING UNIT 12

MOTION
MEASURING UNIT
169

IMAGE
STORAGE UNIT 171

SUPER-RESOLUTION
PROCESSING UNIT 172

IMAGE PROCESSING
UNIT 15

R

FIG.18

PHOTOGRAPHING-
PREPARATION-START-
SIGNAL GENERATING
UNIT 116

RELATIVE
VELOCITY
DETECTING UNIT
163

IMAGING TIMING
DECIDING UNIT 14

OPTICAL
ELEMENT
MOVING UNIT
138

IMAGING
ELEMENT
MOVING UNIT
117

MOTION
MEASURING
UNIT 169

HIGH-
RESOLUTION
DETERMINING
UNIT 1810

OPTICAL
IMAGING UNIT
11

IMAGING UNIT 12

IMAGE
PROCESSING
UNIT 15

FIG.19

(a)

STATUS SUITABLE FOR HIGH-RESOLUTION IN
WHICH DISPLACEMENTS OF IMAGE OF EACH
FRAME ARE EQUAL

(b)

STATUS UNSUITABLE FOR HIGH-RESOLUTION IN
WHICH DISPLACEMENTS OF IMAGE OF EACH
FRAME ARE UNEQUALLY DISTRIBUTED

CENTER POSITION OF PIXEL WITHIN BASE IMAGE

CENTER POSITION AT WHICH PHOTOGRAPHING IS
PERFORMED FOR PIXEL B WITHIN BASE IMAGE

34

FIG.20

(a)

(b)

(c)

# FIG.21

MOTION MEASURING UNIT 169

MOTION INFORMATION OF
EACH IMAGE

HIGH-RESOLUTION DETERMINING UNIT 1810

```
MOTION INFORMATION
HOLDING UNIT
2101
```

```
BELONGING-REGION
COMPUTING UNIT
2102
```

```
COUNTER
ACCORDING TO
BELONGING-REGION
2103
```

```
COMPARING AND
DETERMINING UNIT
2104
```

MOTION INFORMATION OF
EACH IMAGE

HIGH-RESOLUTION-
POSSIBLE SIGNAL

IMAGE
PROCESSING
UNIT 15

IMAGE
PROCESSING
UNIT 15

FIG.22

IMAGING UNIT 12

HIGH-RESOLUTION
DETERMINING UNIT
1810

HIGH-RESOLUTION-
PROCESSING-START
SIGNAL

PHOTOGRAPHED-
IMAGE-
INFORMATION

IMAGE
STORAGE
UNIT 21

SIGNAL
CONFIRMING
UNIT 221

ERROR SIGNAL

MOTION
MEASURING
UNIT 169

MOTION
INFORMATION

MOTION
INFORMATION

PHOTOGRAPHED-
IMAGE-
INFORMATION

SUPER-
RESOLUTION
PROCESSING
UNIT 23

IMAGE
PROCESSING
UNIT 15

HIGH-RESOLUTION-
IMAGE-INFORMATION

FIG.23

PHOTOGRAPHING-
PREPARATION-START-
SIGNAL GENERATING
UNIT 116

RELATIVE
VELOCITY
DETECTING UNIT
163

IMAGING TIMING
DECIDING UNIT 14

OPTICAL
ELEMENT
MOVING UNIT
138

IMAGING
ELEMENT
MOVING UNIT
117

MOTION
MEASURING
UNIT 22

HIGH-
RESOLUTION
DETERMINING
UNIT 1810

OPTICAL
IMAGING UNIT
11

IMAGING UNIT 12

IMAGE
PROCESSING
UNIT 15

## INTERNATIONAL SEARCH REPORT

International application No.

PCT/JP2005/021316

A. CLASSIFICATION OF SUBJECT MATTER
*H04N5/225*(2006.01), *H04N5/232*(2006.01), *H04N5/335*(2006.01)

According to International Patent Classification (IPC) or to both national classification and IPC

B. FIELDS SEARCHED

Minimum documentation searched (classification system followed by classification symbols)
*H04N5/225*(2006.01), *H04N5/232*(2006.01), *H04N5/335*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 4-262681 A  (Aiwa Co., Ltd.),<br>18 September, 1992 (18.09.92),<br>Par. Nos. [0031] to [0037]; Figs. 1, 4<br>(Family: none) | 1,23<br>2-22,24-33 |
| A | JP 2001-136350 A  (Seiko Epson Corp.),<br>18 May, 2001 (18.05.01),<br>Par. Nos. [0072] to [0079]; Fig. 7<br>(Family: none) | 1-33 |
| A | JP 2004-15341 A  (Olympus Corp.),<br>15 January, 2004 (15.01.04),<br>Full text; Figs. 1 to 14<br>(Family: none) | 1-33 |

☐ Further documents are listed in the continuation of Box C.    ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 February, 2006 (24.02.06) | Date of mailing of the international search report<br>07 March, 2006 (07.03.06) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1175099 B